# EUROPÄISCHE PATENTSCHRIFT

(11) **EP 3 470 214 B1**
(45) Veröffentlichungstag und Bekanntmachung des Hinweises auf die Patenterteilung: **16.06.2021**
(21) Anmeldenummer: 17195790.5
(22) Anmeldetag: 10.10.2017
(51) Int. Cl.: B29C 70/24

(54) **VORRICHTUNG UND VERFAHREN ZUR HERSTELLUNG EINES MEHRERE FASERBÜNDEL AUFWEISENDEN TRÄGERTEILS**
DEVICE AND METHOD FOR THE PREPARATION OF A CARRIER HAVING MULTIPLE FIBRE BUNDLES
DISPOSITIF ET PROCÉDÉ DE FABRICATION D'UN SUPPORT COMPORTANT UNE PLURALITÉ DE FAISCEAUX DE FIBRES

(43) Veröffentlichungstag der Anmeldung: 17.04.2019
(73) Patentinhaber: Groz-Beckert KG, 72458 Albstadt (DE)
(72) Erfinder: Bruske, Johannes, 72458 Albstadt (DE); Winterholer, Daniel, 72459 Albstadt (DE)
(74) Vertreter: Rüger Abel Patentanwälte PartGmbB

(56) Entgegenhaltungen:
- WO-A1-92/00845
- WO-A1-2008/111997
- WO-A1-2016/092194
- DE-A1-102005 024 408
- DE-A1-102007 055 684
- GB-A- 2 159 460

## Beschreibung

Die Erfindung betrifft eine Vorrichtung sowie ein Verfahren zur Herstellung eines mehrere Faserbündel aufweisenden Trägerteils. Bei dem Trägerteil handelt es sich insbesondere um ein Leichtbauträgerteil, beispielsweise ein Trägerteil aus einem Schaumwerkstoff. Die Faserbündel können mit einem Kunststoffmaterial, beispielsweise einem Harz, getränkt werden, um ein Verbundwerkstoffbauteil zu erhalten.

Ein derartiges, Faserbündel aufweisendes Trägerteil ist aus DE 10 2005 024 408 A1 bekannt. Zur Herstellung wird zunächst ein Loch in das Trägerteil eingebracht, um anschließend die Faserbündel durch die eingebrachten Löcher hindurchzuziehen. Dazu wird eine Nadel verwendet. Ein solches Verfahren ist auch aus WO 2014/086786 A1 und DE 10 2014 015 976 A1 bekannt.

DE 10 2006 056 570 B3 beschreibt eine Nähvorrichtung zum Einziehen solcher Faserbündel in ein Trägerteil. Die Nähvorrichtung weist insbesondere eine Nadel mit einer Öse auf, die über ein bewegbares Nadelteil an einer Stelle geöffnet bzw. geschlossen werden kann.

WO 2016/059110 A1 betrifft eine Vorrichtung sowie ein Verfahren zum bereitstellen von Verstärkungsstrangschlaufen, die durch ein Trägerteil gezogen werden können. Hierzu wird ein Profilkörper mit Klemmen zum Fixieren eines Faserstrangs bereitgestellt. Der an dem Profilkörper an seinem freien Ende fixierte und ansonsten freigegebene Faserstrang wird mittels eines Schiebers zu einer Schlaufe geformt und nach Bildung der Schlaufe in der gewünschten Länge mittels einer Trenneinrichtung abgetrennt. Die Schlaufe kann dann mittels einer Nadel durch das Trägerteil hindurchgezogen werden.

Eine Vorrichtung und ein Verfahren zum Hindurchziehen von Schlaufen durch ein Trägerteil ist in DE 10 2007 055 684 A1 beschrieben, die den nächstkommenden Stand der Technik darstellt. Dort wird ein Faserbündelstrang mittels Rollen einer Aufnahmevorrichtung zugeführt. Die Aufnahmevorrichtung wird anschließend mittels eines Schlittens linear und parallel zur Längsrichtung des Faserbündelstrangs bewegt, bis sich ein Spalt der Aufnahmevorrichtung in der Mitte des Faserbündelstrangabschnitts zwischen dessen freien Ende und einer Trennvorrichtung befindet. Eine Nadel wird durch ein Trägerteil hindurch in den Spalt hinein bewegt, nimmt den Faserbündelstrang auf und zieht diesen durch das Trägerteil hindurch. Diese Vorrichtung umfasst eine Faserbündelfördereinheit, die dazu eingerichtet ist, den Faserbündelstrang aus einem Vorrat zu entnehmen und zu fördern, sowie die an einer Nadelhalteeinheit angeordnete Nadel, die einen Nadelhaken aufweist, wobei die Nadelhalteeinheit dazu eingerichtet ist, die Nadel zwischen einer Rückzugsstellung und einer Ausfahrstellung zu bewegen, um mit dem Nadelhaken der Nadel am frei liegenden und sich in einer Längsrichtung erstreckenden Faserbündelstrang anzugreifen und mittels der Nadel durch das Trägerteil hindurch zu bewegen.

Eine Vorrichtung, bei der ein Faserstrang mittels einer drehbaren Einrichtung um eine durch das Trägerteil hindurch gestochene Nadel gelegt wird, ist in DE 10 2009 050 904 A1 beschrieben. Anschließend kann die Nadel zurückgezogen und unter Bildung einer Schlaufe durch das Trägerteil gezogen werden. Ähnliche Einrichtungen, um einen Faserbündelstrang in einen Nadelhaken einer Nadel einzulegen, sind beispielsweise aus DE 10 2007 033 869 A1 sowie DE 10 2013 111 794 A1 bekannt.

DE 2 025 915 A1 beschreibt ein Verfahren zur Verteilung von Verstärkungsmaterial in Form von Glasfasern bei der Herstellung von Kunststoffteilen. Dabei wird ein Roving 17 in einem Luftstrom aus Druckluft mitgeführt und seine einzelnen Enden werden aufgelöst und die aufgelösten Einzelfasern auf ein Lochblech geblasen. Auf der entgegengesetzten Seite des Lochblechs wird Luft abgesaugt, um ein Anhaften der Fasern am Lochblech zu erreichen. Anschließend kann eine Kunststoffbeschichtung aufgebracht werden. Ein ähnliches Verfahren ist auch in DE 2 307 490 A beschrieben.

EP 07 36 618 B1 beschreibt das Zuführen eines Faserbandes in die Klemmlinie von Kalanderscheiben einer faserbandverarbeitenden Textilmaschine. Mit Hilfe von Führungsluft wird das Faserband durch den Kalanderspalt eingefädelt und anschließend kann eine Kalanderscheibe zugestellt werden, um das eingefädelte Faserband zu klemmen. Bei dem aus DE 10 2015 110 855 A1 bekannten Verfahren werden Rovings auf einem Förderband transportiert und mittels Unterdruck am Förderband gehalten.

WO 2016/092194 A1 beschreibt ein Verfahren zum Hindurchführen eines Fadens durch eine Trägerplatte. Der Faden wird beim Durchstechen der Trägerplatte mit einer Nadel mitgeführt und bildet dadurch eine Schlaufe, die auf der Austrittsseite durchtrennt wird.

Ausgehend von dem beschriebenen Stand der Technik kann es als Aufgabe der Erfindung angesehen werden, eine Vorrichtung und ein Verfahren zu schaffen, um die Herstellung eines mehrere Faserbündel aufweisenden Trägerteils effizienter zu gestalten.

Diese Aufgabe wird durch eine Vorrichtung mit den Merkmalen des Patentanspruches 1 sowie ein Verfahren mit den Merkmalen des Patentanspruches 16 gelöst.

Die Vorrichtung hat eine Faserbündelfördereinheit, die dazu eingerichtet ist, wenigstens einen Faserbündelstrang aus einem Vorrat zu entnehmen. Es ist wenigstens ein Zufuhrkanal vorhanden, in dem jeweils ein Faserbündelstrang mittels der Faserbündelfördereinheit gefördert werden kann. Die Vorrichtung verfügt außerdem über wenigstens einen Saugkanal, der fluidisch mit einer Saugeinheit verbunden ist. Mittels der Saugeinheit kann in dem wenigstens einen Saugkanal eine Luftströmung erzeugt werden, die insbesondere von dem der Saugeinheit entgegengesetzten Ende des Saugkanals weggerichtet ist.

Der wenigstens eine Saugkanal ist zwischen einer Ausgangsstellung und einer Arbeitsstellung bewegbar, vorzugsweise linear in einer Längsrichtung. In der Ausgangsstellung befindet sich der wenigstens eine Saugkanal in einem Arbeitsbereich der Vorrichtung. In der Ausgangsstellung ist jeder vorhandene Saugkanal mit jeweils einem zugeordneten Zufuhrkanal fluidisch verbunden. Wird in der Ausgangsstellung ein Luftstrom erzeugt, entsteht im Zufuhrkanal ein Unterdruck, der einen Endabschnitt des im Zufuhrkanal vorhandenen Faserbündelstrangs ansaugt. In dieser Ausgangsstellung kann über die Faserbündelfördereinheit eine vorgegebene Länge des Faserbündelstrangs gefördert werden, dass sich in den Saugkanal hinein erstreckt.

Der wenigstens eine Saugkanal kann aus dem Arbeitsbereich heraus in eine Arbeitsstellung bewegt werden. In der Arbeitsstellung ist er mit Abstand zum jeweils zugeordneten Zufuhrkanal angeordnet. In der Arbeitsstellung wird die Luftströmung aufrechterhalten. Dadurch wird der in der Arbeitsstellung vorhandene Endabschnitt des Faserbündelstrangs mit einer Saugkraft beaufschlagt und erstreckt sich außerhalb des Saugkanals und des Zufuhrkanals zumindest abschnittsweise frei zugänglich durch den Arbeitsabschnitt.

Die Vorrichtung weist außerdem eine Nadelhalteeinheit mit wenigstens einer daran angeordneten Nadel auf. Jede Nadel hat einen Nadelhaken. Mittels der Nadelhalteeinheit kann die wenigstens eine Nadel zwischen einer Rückzugsstellung und einer Ausfahrstellung bewegt werden. Durch diese Bewegung kann jede Nadel an einem zugeordneten Faserbündelstrang im Arbeitsbereich angreifen und durch die Bewegung der Nadel den Faserbündelstrang unter Bildung einer Schlaufe durch das Trägerteil hindurch bewegen. Jede Nadel wird zwischen der Ausfahrstellung und der Rückzugsstellung entlang ihrer Längsachse bewegt. Bevorzugt sind mehrere Nadeln vorhanden und alle Längsachsen sind in derselben gemeinsamen Ebene angeordnet.

Mittels dieser Vorrichtung lässt sich mit geringem Abstand eine Vielzahl von Nadeln an der Nadelhalteeinheit anordnen. In entsprechendem Abstand können die Faserbündelstränge nebeneinander im Arbeitsbereich angeordnet werden. Das Bereitstellen und Zuführen bzw. Fördern der einzelnen Faserbündelstränge benötigt quer zur Längsrichtung der Faserbündelstränge wenig Bauraum. Abhängig von der Größe des Trägerteils und des gewünschten Abstands der in das Trägerteil einzubringenden Faserbündel lassen sich daher große Faserbündeldichten im Trägerteil sehr effizient herstellen.

Unter der Längsrichtung ist die Richtung zu verstehen, in die sich eine Gerade durch den Arbeitsbereich erstreckt, die die einander zugewandten Mündungen des wenigstens einen Zufuhrkanals und des jeweils zugeordneten Saugkanals verbindet. Der wenigstens eine Faserstrang ist im Arbeitsbereich in Längsrichtung zwischen dem wenigstens einen Zufuhrkanal und dem jeweils zugeordneten Saugkanal ausgerichtet, solange er nicht durch die eine Nadel oder eine Führungseinrichtung quer zur Längsrichtung beaufschlagt wird.

Die Vorrichtung kann eine Steuereinrichtung aufweisen, um die einzelnen Antriebe bzw. die einzelnen Einheiten der Vorrichtung anzusteuern, insbesondere die Nadeleinheit, die Saugeinheit, einen Antrieb zur Bewegung des wenigstens einen Saugkanals, die Fördereinheit und optional weitere Antriebe oder Einheiten. Die Steuereinrichtung ist insbesondere dazu ausgebildet, das beschriebene Verfahren durchzuführen.

Die Vorrichtung weist vorzugsweise eine Positioniereinheit auf. Die Positioniereinheit ist dazu eingerichtet, das Trägerteil insbesondere schrittweise in eine Transportrichtung zu bewegen bzw. in dieser Richtung zu positionieren. Die Transportrichtung ist parallel zur Längsrichtung ausgerichtet.

Es ist dabei vorteilhaft, wenn die Positioniereinheit zwischen dem Arbeitsbereich und der Nadelhalteeinheit angeordnet ist. Die Nadelhalteeinheit kann sich daher außerhalb des Arbeitsbereichs und ausgehend von der Positioniereinheit betrachtet auf der dem Arbeitsbereich entgegengesetzten Seite befinden. Bei dieser Ausgestaltung werden die Faserbündel mit Hilfe der jeweiligen Nadel durch das Trägerteil gezogen. Alternativ hierzu ist es auch möglich, die Nadelhalteeinheit im Arbeitsbereich anzuordnen und das wenigstens eine Faserbündel mit Hilfe der jeweiligen Nadel durch das Trägerteil zu schieben.

Bei einer bevorzugten Ausführungsform hat die Faserbündelfördereinheit eine Rollenanordnung mit beispielsweise wenigstens zwei Rollen. Durch das Antreiben einer oder beider Rollen kann der wenigstens eine Faserbündelstrang mit einer definierten Länge gefördert werden. Die Faserbündelfördereinheit kann beispielsweise die Drehstellung einer Rolle oder eines damit drehgekoppelten Teils erfassen und daraus die jeweils geförderte Länge des Faserbündelstrangs ermitteln.

Es ist außerdem vorteilhaft, wenn eine Führungseinheit mit einer Führungseinrichtung vorhanden ist. Die Führungseinrichtung ist im Arbeitsbereich angeordnet. Die Führungseinrichtung weist für jeden vorhandenen Faserbündelstrang einen separaten Führungsdurchgang auf. Dadurch kann zur Führung jeweils ein Faserbündelstrang durch einen zugeordneten Führungsdurchgang geführt werden.

Es ist bevorzugt, wenn der wenigstens eine Saugkanal in seiner Ausgangsstellung durch jeweils einen Führungsdurchgang der Führungseinheit hindurch verläuft. Nach dem Zuführen des Endabschnitts des Faserbündelstrangs in den Saugkanal und dem Zurückbewegen des Saugkanals in seine Arbeitsstellung ist der betreffende Abschnitt des Faserbündelstrangs durch den Führungsdurchgang hindurch gefädelt. Mittels der Führungseinrichtung kann der Faserbündelstrang quer zu seiner Längsrichtung im Arbeitsbereich bewegt bzw. positioniert werden.

Es ist außerdem vorteilhaft, wenn die Führungseinrichtung zwei Führungskörper aufweist. Die beiden Führungskörper sind im Bereich des Führungsdurchgangs unter Bildung eines Zwischenraums mit Abstand zueinander angeordnet. Der Zwischenraum trennt den Führungsdurchgang in zwei miteinander fluchtende Führungslöcher. Jedes der Führungslöcher durchsetzt einen der beiden Führungskörper in der Längsrichtung. Der Zwischenraum kann dazu vorgesehen und eingerichtet sein, ein freies Ende einer zugeordneten Nadel aufzunehmen, um den betreffenden Faserbündelstrang in den Nadelhaken einzuhaken. Die Führungskörper sind beispielsweise integral ausgeführt und können durch jeweils ein plattenförmiges Bauteil gebildet sein. Der wenigstens eine Führungsdurchgang ist bei einem bevorzugten Ausführungsbeispiel in Umfangsrichtung stets vollständig geschlossen, wobei das Durchführen des Faserbündelstrangs durch den wenigstens einen Saugkanal erfolgt.

Es ist außerdem vorteilhaft, wenn die Führungseinheit dazu eingerichtet ist, die Führungseinrichtung entlang einer vorgegebenen Bahn zu bewegen. Diese Bahn erstreckt sich parallel zu einer Ebene, die rechtwinklig zu der Längsrichtung ausgerichtet ist. Die Bahn ist insbesondere als geschlossene und zumindest abschnittsweise gekrümmte Bahn ausgeführt. Die Bahn kann beispielsweise eine kreisförmige und/oder elliptische und/oder andere beliebige zumindest abschnittsweise gekrümmte Gestalt aufweisen. Durch die Bewegung der Führungseinheit entlang der Bahn wird der wenigstens eine Faserbündelstrang quer zur Längsrichtung mitbewegt und kann das Angreifen der betreffenden Nadel am Faserbündelstrang und insbesondere das Einhaken des wenigstens einen Faserbündelstrangs in den Nadelhaken der jeweils zugeordneten Nadel vereinfachen.

Bei einer bevorzugten Ausführungsform ist vorgesehen, dass die Nadel in ihrer Ausfahrstellung oder in ihrer Rückzugstellung einen sich in Längsrichtung erstreckenden Korridor kreuzt, der durch die Bahn definiert ist, auf der sich der jeweils zugeordnete Führungsdurchgang der Führungseinrichtung bewegt. Die Nadel dringt dabei in den Korridor ein, dessen Querschnitt durch die Bahn angegeben ist. Innerhalb dieses Korridors kann ein sicheres Angreifen der Nadel am Faserbündelstrang erfolgen. Durch eine anschließende Relativbewegung der Führungseinrichtung entlang der Bahn relativ zur Nadel wird der Faserbündelstrang unter Bildung eines Knicks oder einer Krümmung um die Nadel bzw. dem Nadelhaken gelegt.

Die Vorrichtung weist bei einem bevorzugten Ausführungsbeispiel außerdem eine Stützeinheit auf. Die Stützeinheit hat ein im Arbeitsbereich angeordnetes Stützteil und ist dazu eingerichtet, das Stützteil zwischen einer Ruhestellung und einer Stützstellung zu bewegen. Das Stützteil hat wenigstens eine Stützöffnung, wobei die Anzahl der Stützöffnungen der Anzahl der Zufuhrkanäle und der Anzahl der Saugkanäle bzw. der Anzahl der Faserbündelstränge entspricht. In der Ausgangsstellung verläuft der wenigstens eine Saugkanal vorzugsweise durch eine jeweils zugeordnete Stützöffnung hindurch. Analog zu den Führungsdurchgängen kann dadurch ein Einfädeln eines Faserbündelstrangs durch die betreffende Stützöffnung erfolgen, wenn der Saugkanal in seine Arbeitsstellung außerhalb des Arbeitsbereichs bewegt wird.

Es ist vorteilhaft, wenn die Ebene, in der sich die Längsachse der jeweils einem Faserbündelstrang zugeordnete Nadel befindet, in etwa mittig zwischen dem freien Ende des sich in der Arbeitsstellung befindenden Saugkanals und der Stützöffnung des sich in der Stützstellung befindenden Stützteils angeordnet ist. Durch diese Maßnahme lässt sich eine Faserbündelschlaufe mit in etwa gleich langen Schenkeln erzeugen.

Es ist außerdem bevorzugt, wenn sich der Führungsdurchgang beim Hindurchbewegen der Nadel mit dem Faserbündel durch das Trägerteil an einer Stelle der Bahn befindet, in der der Führungsdurchgang in etwa in Verlängerung der Längsachse der Nadel angeordnet ist. Durch diese Ausgestaltung kann vermieden werden, dass das Faserbündel beim Hindurchbewegen durch das Trägerteil in das Material des Trägerteils einschneidet und dadurch ein Loch oder eine Öffnung durch das Trägerteil hindurch aufweitet.

Bei einem weiteren bevorzugten Ausführungsbeispiel ist benachbart zum Zufuhrkanal eine erste Trenneinheit vorhanden. Mittels der ersten Trenneinheit kann der wenigstens eine Faserbündelstrang benachbart zur Mündung des Zufuhrkanals durchtrennt werden. Es ist außerdem vorteilhaft, wenn eine zweite Trenneinheit vorhanden ist. Die zweite Trenneinheit ist dazu eingerichtet, eine auf der einen Seite des Trägerteils gebildete Schlaufe des das Trägerteil durchsetzenden Faserbündels zu durchtrennen.

Der Ablauf des Verfahrens zur Herstellung eines Trägerteils mit mehreren das Trägerteil durchsetzenden Faserbündeln ist wie folgt:

Zunächst wird der wenigstens eine Saugkanal in den Arbeitsbereich bewegt und fluidisch mit jeweils einem zugeordneten Zufuhrkanal fluidverbunden. Über die Saugeinheit wird anschließend eine Luftströmung in dem wenigstens einen Saugkanal und dem damit fluidverbundenen Zufuhrkanal erzeugt. Über die Faserbündelfördereinheit wird ein Abschnitt des wenigstens einen Faserbündelstrangs mit definierter Länge aus einem Vorrat entnommen und in den jeweils einen Zufuhrkanal und weiter in den jeweils einen Saugkanal gefördert. Der wenigstens eine Faserbündelstrang wird durch die von der Faserbündelfördereinheit weg gerichtete Luftströmung mit einer Saugkraft beaufschlagt und sozusagen gespannt.

Anschließend wird der wenigstens eine Saugkanal aus dem Arbeitsbereich heraus in die Arbeitsstellung bewegt. Der wenigstens eine Faserbündelstrang ist im Arbeitsbereich dadurch zumindest teilweise zugänglich. In der Arbeitsstellung des Saugkanals bleibt die Luftströmung zur Spannung des wenigstens einen Faserbündelstrangs aufrechterhalten.

Über die Nadelhalteeinheit wird die wenigstens eine Nadel zwischen einer Rückzugsstellung und einer Ausfahrstellung bewegt. Bei dieser Bewegung wird die Nadel zweimal durch das Trägerteil hindurchbewegt. Bei einer dieser beiden Bewegungen greift die Nadel vorher an einer Stelle des zugeordneten Faserbündelabschnitts im Arbeitsbereich an und bewegt den Faserbündelstrang durch das Trägerteil hindurch, wobei eine Schlaufe gebildet wird. Vorzugsweise wird vor dem Hindurchbewegen des Faserbündelstrangs durch das Trägerteil ein Durchtrennen des Faserbündelstrangs benachbart zum Zufuhrkanal ausgeführt.

Vorteilhafte Ausgestaltungen der Vorrichtung und des Verfahrens ergeben sich aus den abhängigen Patentansprüchen, der Beschreibung und den Zeichnungen. Nachfolgend werden bevorzugte Ausführungsbeispiele anhand der beigefügten Zeichnungen im Einzelnen erläutert. Es zeigen:
Figuren 1-6 jeweils ein schematisches, blockschaltbildähnliches Ausführungsbeispiel einer Vorrichtung in unterschiedlichen Situationen bei der Herstellung eines mehrere Faserbündel aufweisenden Trägerteils,
Figur 7 eine schematische Darstellung der Schlaufenbildung nach dem Hindurchziehen eines Faserbündels durch das Trägerteil mit der Vorrichtung gemäß der Figuren 1-6,
Figur 8 eine schematische Darstellung des Auftrennens der in Figur 7 gebildeten Schlaufe,
Figuren 9 und 10 jeweils eine beispielhafte Darstellung einer Position einer Führungseinrichtung der Vorrichtung gemäß der Figuren 1-6 bei einer Bewegung entlang einer Bahn relativ zu der wenigstens einen Nadel der Vorrichtung,
Figur 11 eine schematische Teildarstellung eines Trägerteils mit den mehreren Faserbündeln in einer Draufsicht,
Figur 12 die Darstellung des Trägerteils aus Figur 11 in einer Seitenansicht gemäß Pfeil XII, und
Figur 13 eine perspektivische Darstellung eines Ausführungsbeispiels einer Führungseinrichtung und einer Stützeinheit einer Vorrichtung.

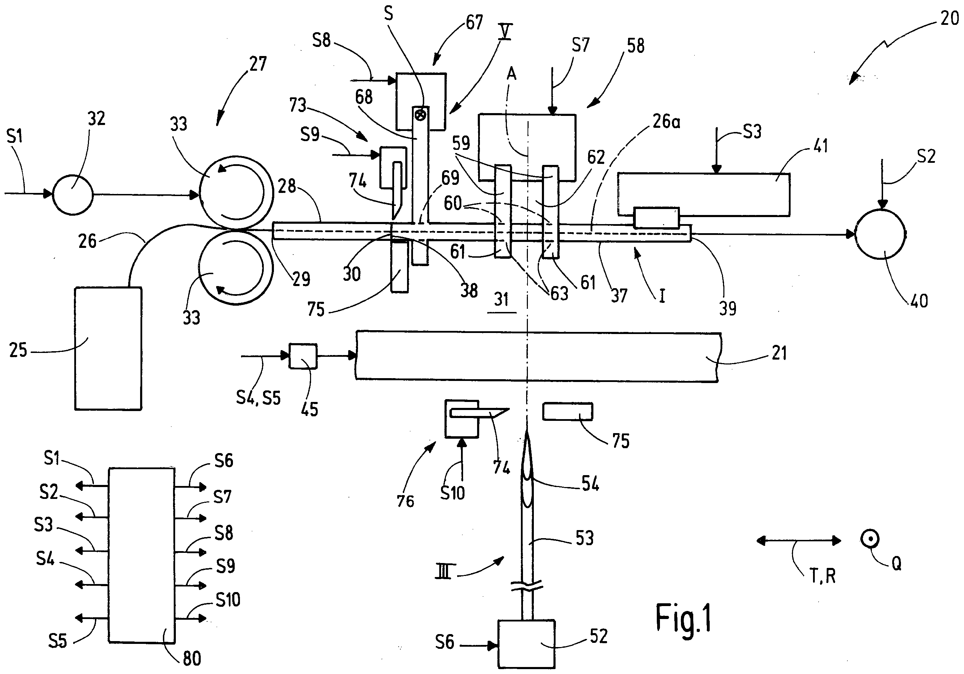

In den Figuren 1-6 ist schematisch nach Art eines Blockschaltbilds ein Ausführungsbeispiel einer Vorrichtung 20 zur Herstellung eines Trägerteils 21 mit mehreren Faserbündeln 22 veranschaulicht. Die Faserbündel 22 können mit ihren beiden Endbereichen aus dem Trägerteil 21 vorstehen und somit über die Oberseite und die Unterseite des Trägerteils 21 hinausragen. Die Richtung, in der die Faserbündel 22 durch das Trägerteil 21 hindurch verlaufen, kann rechtwinkelig und/oder unter einem Winkel geneigt zu der Oberseite und/oder Unterseite des Trägerteils ausgerichtet sein. Dabei können die Faserbündel 22 parallel ausgerichtet sein oder auch in unterschiedlichen Richtungen verlaufen. Beispielsweise können Gruppen mit jeweils mehreren Faserbündeln 22 gebildet werden, wobei die Faserbündel 22 verschiedener Gruppen in unterschiedliche Richtungen verlaufen und die Faserbündel innerhalb derselben Gruppe parallel ausgerichtet sind.

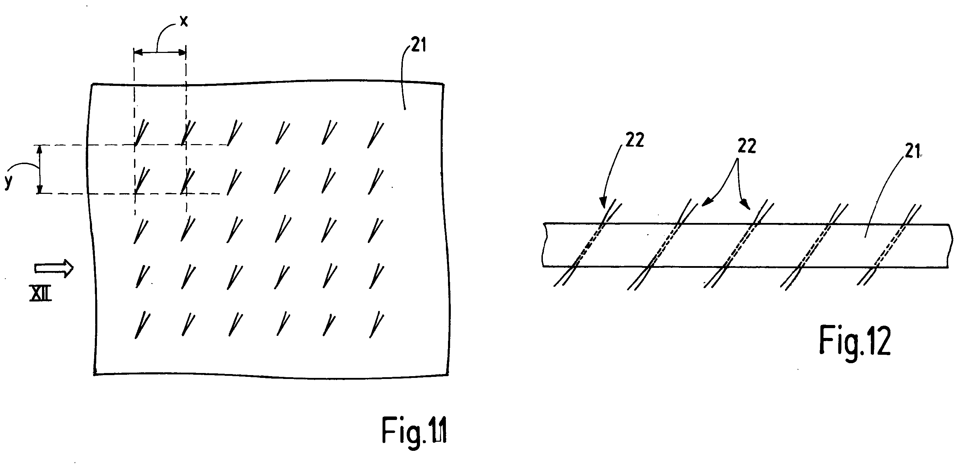

Das Trägerteil 21 ist beim Ausführungsbeispiel durch eine Platte gebildet und schematisch in den Figuren 11 und 12 veranschaulicht. Dieses mit Faserbündeln 22 versehene Trägerteil 21 dient als Halbzeug bei der Herstellung eines Verbundwerkstoffbauteils. Die Faserbündel 22 sind vorzugsweise aus Abschnitten eines Rovings hergestellt. Beispielsweise können die durch das Trägerteil 21 hindurchgeführten Faserbündel 22 mit einem Kunststoff oder einem Harz getränkt bzw. infiltriert werden. Auf der Oberseite und/oder der Unterseite des Trägerteils 21 können weitere Faserbündel oder Fasermatten angeordnet und mit dem Harz oder dem Kunststoff getränkt werden, um ein faserverstärktes Verbundwerkstoffbauteil zu erhalten. Wie es in den Figuren 11 und 12 zu erkennen ist, ragen die beiden Endbereiche der durch das Trägerteil 21 hindurchgeführten Faserbündel 22 aus dem Trägerteil heraus und können daher mit Faserbündeln oder Fasermatten stoffschlüssig verbunden werden, die auf der Oberseite bzw. der Unterseite des Trägerteils 21 angeordnet werden.

Beispielsgemäß sind die Faserbündel matrixförmig in dem Trägerteil angeordnet und haben in eine Raumrichtung einen Abstand x und rechtwinklig dazu, in einer anderen Raumrichtung einen Abstand y. Die Abstände x und y können gleich oder verschieden groß sein.

Bei dem Trägerteil 21 handelt es sich insbesondere um eine Leichtbauplatte, beispielsweise eine Platte aus Schaumwerkstoff.

Anhand von Figur 1 werden die wesentlichen Baugruppen der Vorrichtung 20 erläutert. Die Vorrichtung 20 weist einen Vorrat 25 für wenigstens einen Faserbündelstrang 26 auf. Jeder Faserbündelstrang 26 ist beispielsgemäß durch ein Roving mit einer Mehrzahl von Filamenten gebildet. Aus dem wenigstens einen Faserbündelstrang 26 werden die Faserbündel 22 mittels der Vorrichtung 20 abgetrennt und durch das Trägerteil 21 hindurchgeschoben oder hindurchgezogen.

Eine Faserbündelfördereinheit 27 ist dazu eingerichtet, den wenigstens einen Faserbündelstrang 26 aus dem Vorrat 25 zu entnehmen und jeden Faserbündelstrang 26 in einen separaten Zufuhrkanal 28 zu fördern. Jeder Zufuhrkanal 28 kann durch ein Rohr gebildet sein. Das erste Ende 29 des Zufuhrkanals 28 ist der Faserbündelfördereinheit 27 zugeordnet, während das entgegengesetzte zweite Ende 30 des Zufuhrkanals 28 einem Arbeitsbereich 31 der Vorrichtung 20 zugeordnet ist. Die Faserbündelfördereinheit 27 hat beim Ausführungsbeispiel einen ansteuerbaren ersten Antrieb 32. Der erste Antrieb 32 treibt eine Rollenanordnung mit wenigstens zwei Rollen 33 an. Der wenigstens eine Faserbündelstrang 26 wird zwischen den beiden Rollen kraft- bzw. reibschlüssig gehalten und über das erste Ende 29 dem Zufuhrkanal 28 zugeführt. Die Faserbündelfördereinheit 27 ist beim Ausführungsbeispiel dazu eingerichtet, alle vorhandenen Faserbündelstränge 26 zu fördern.

Die Vorrichtung 20 weist wenigstens einen Saugkanal 37 auf. Die Anzahl der Zufuhrkanäle 28 und die Anzahl der Saugkanäle 37 ist gleich groß und entspricht der Anzahl der zu fördernden Faserbündelstränge 26. Der wenigstens eine Saugkanal 37 hat ein dem zugeordneten Zufuhrkanal 28 zugeordnetes erstes Ende 38 und ein entgegengesetztes zweites Ende 39. Das zweite Ende 39 des wenigstens einen Saugkanals 37 ist jeweils mit einer Saugeinheit 40 fluidisch verbunden. Die Saugeinheit 40 ist dazu eingerichtet, eine Luftströmung L in dem wenigstens einen Saugkanal 37 zu erzeugen, die jeweils vom ersten Ende 38 zum zweiten Ende 39 hin strömt.

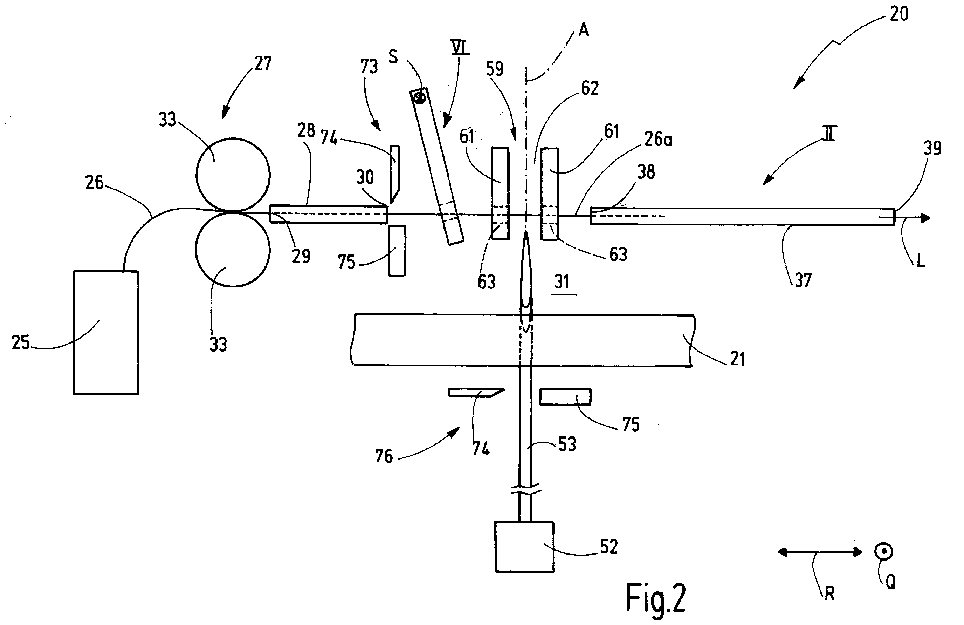

Mittels eines zweiten Antriebs 41 kann der wenigstens eine Saugkanal 37 zwischen einer Ausgangsstellung I (in Figur 1 dargestellt) und einer Arbeitsstellung II (in den Figuren 2-6 dargestellt) bewegt und beispielsgemäß linear in einer Längsrichtung R verschoben werden. In der Ausgangsstellung I ist der wenigstens eine Saugkanal 37 mit dem jeweils zugeordneten Zufuhrkanal 28 derart fluidgekoppelt, dass die Saugeinheit 40 im Zufuhrkanal 28 einen Unterdruck erzeugt. Mit anderen Worten kann in der Ausgangsstellung I eine Luftströmung L durch den wenigstens einen Zufuhrkanal 28 und den damit fluidgekoppelten wenigstens einen Saugkanal 37 erzeugt werden. Wie es in Figur 1 veranschaulicht ist, ragt der wenigstens eine Saugkanal 37 in der Ausgangsstellung I in den Arbeitsbereich 31 hinein. Das erste Ende 38 jedes Saugkanals 37 liegt dabei am zweiten Ende 30 des zugeordneten Zufuhrkanals 28 an oder mit geringem Abstand gegenüber.

In der Arbeitsstellung II ist der wenigstens eine Saugkanal 37 außerhalb des Arbeitsbereichs 31 angeordnet. Das zweite Ende 30 des wenigstens einen Zufuhrkanals 28 und das jeweils zugeordnete erste Ende 38 des Saugkanals 37 liegen sich in Längsrichtung R auf entgegengesetzten Seiten des Arbeitsbereichs 31 mit Abstand gegenüber (vergleiche Figuren 2-6). Wurde der wenigstens eine Saugkanal 37 in die Ausgangsstellung I bewegt, kann über die Faserbündelfördereinheit 27 eine definierte Länge eines Endabschnitts 26a des wenigstens einen Faserbündelstrangs 26 über den wenigstens einen Zufuhrkanal 28 in den wenigstens einen Saugkanal 37 gefördert werden. Dieser Endabschnitt 26a ist in Figur 1 gestrichelt dargestellt. Durch die erzeugte Luftströmung L mittels der Saugeinheit 40 wird das Fördern des Endabschnitts 26a des Faserbündelstrangs 26 in den betreffenden Saugkanal 37 unterstützt. Sobald die Faserbündelfördereinheit 27 die definierte Länge in den Saugkanal 37 gefördert hat, wird die Faserbündelfördereinheit 27 stillgesetzt und ein weiteres Zuführen des wenigstens einen Faserbündelstrangs 26 gestoppt. Unter Aufrechterhaltung der Luftströmung L kann der wenigstens eine Saugkanal 37 in die Arbeitsstellung II bewegt werden, so dass sich der Endabschnitt 26a des Faserbündelstrangs 26 zumindest teilweise frei zugänglich zwischen dem betreffenden Zufuhrkanal 28 und dem betreffenden Saugkanal 37 zunächst noch in Längsrichtung R durch den Arbeitsbereich 31 hindurch erstreckt. Die Luftströmung L sorgt dabei für eine ausreichend gute Streckung des Endabschnitts 26a jedes Faserbündelstrangs 26. In der Arbeitsstellung II ragt ein Teil des Endabschnitts 26a in den jeweils zugeordneten Saugkanal 37 hinein (Figur 2). Um den Ablauf zu beschleunigen kann die Bewegung des Saugkanals 37 in die Arbeitsstellung II auch bereits eingeleitet werden während die Faserbündelfördereinheit 27 fördert. Es ist bei dieser Vorgehensweise lediglich sicherzustellen, dass sich genügend Länge des Faserbündelstrangs 26 innerhalb des Saugkanals 37 befindet, so dass sichergestellt ist, dass die Luftströmung den Endabschnitt des Faserbündelstrangs 26a in gestreckter Lage transportiert.

Benachbart zum Arbeitsbereich 31 ist eine Positioniereinheit 45 zum Bewegen und Positionieren des Trägerteils 21 vorhanden. Die Positioniereinheit 45 ist dazu eingerichtet, das Trägerteil 21 in eine Transportrichtung T, die parallel zur Längsrichtung R verläuft, schrittweise zu bewegen und das Trägerteil 21 zu positionieren. Die konkrete Ausgestaltung der Positioniereinheit 45 kann variieren und hängt beispielsweise davon ab, ob es sich bei dem Trägerteil 21 um eine biegesteife Platte oder ein flexibles, biegbares Trägerteil 21, wie etwa ein Textilflächengebilde, eine Matte oder eine Bahn handelt.

Auf der dem Arbeitsbereich 31 entgegengesetzten Seite des Trägerteils 21 ist eine Nadelhalteeinheit 52 vorhanden. Die Nadelhalteeinheit 52 trägt wenigstens eine Nadel 53. Die Anzahl der Nadeln 53 richtet sich nach der Anzahl der vorhandenen Faserbündelstränge 26. Jedem Faserbündelstrang 26 ist eine Nadel 53 zugeordnet. Jede Nadel 53 erstreckt sich entlang ihrer Längsachse A und hat beim Ausführungsbeispiel einen Nadelhaken 54, um an einem zugeordneten Endabschnitt 26a des betreffenden Faserbündelstrangs 26 anzugreifen und derart an der Nadel 53 zu halten, dass der Endabschnitt 26a durch das Trägerteil 21 gezogen werden kann. Die Längsachse A jeder Nadel 53 verläuft durch den Arbeitsbereich 31 und ist beispielsgemäß in einer Ebene angeordnet, die rechtwinklig zur Transportrichtung T bzw. zur Längsrichtung R ausgerichtet ist.

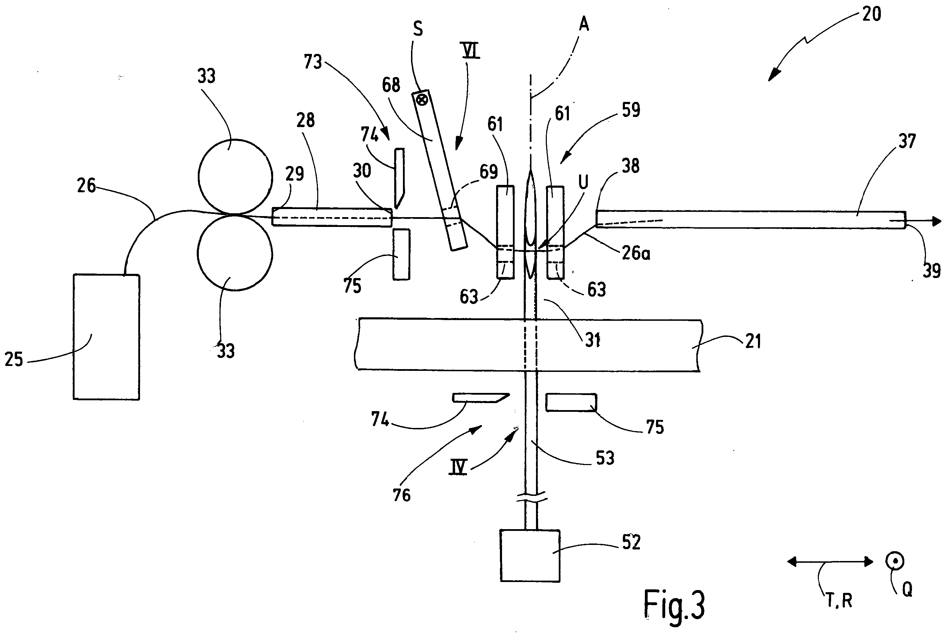

Mittels der Nadelhalteeinheit 52 kann die wenigstens eine Nadel 53 entlang ihrer Längsachse A zwischen einer Rückzugsstellung III (Figur 1) und einer Ausfahrstellung IV (Figur 3) bewegt werden. In der Ausfahrstellung IV befindet sich der Nadelhaken 54 der Nadel 53 im Arbeitsbereich 31. In der Rückzugsstellung III befindet sich die Nadel vollständig außerhalb des Arbeitsbereichs 31 und ragt nicht durch das Trägerteil 21 hindurch bzw. in das Trägerteil 21 hinein. Bei der Bewegung von der Rückzugsstellung III in die Ausfahrstellung IV durchsticht die Spitze der Nadel 53 das Trägerteil 21 und bewegt sich weiter, bis die Ausfahrstellung IV im Arbeitsbereich 31 erreicht ist. Bei der Bewegung aus der Ausfahrstellung IV zurück in die Rückzugsstellung III wird der Endabschnitt 26a des Faserbündelstrangs 26 durch das Loch in dem Trägerteil 21 gezogen, das beim Hindurchstechen der Nadel 53 gebildet wurde.

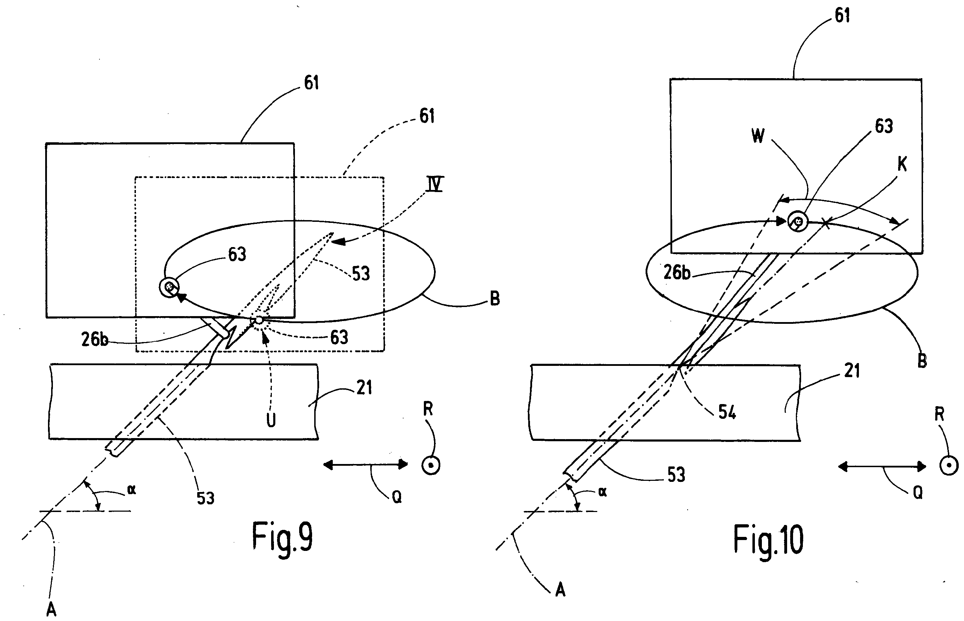

In den Figuren 9 und 10 ist zu erkennen, dass die Längsachse A jeder Nadel 53 mit einem Neigungswinkel α gegenüber einer Querrichtung Q und innerhalb einer Ebene rechtwinklig zur Längsrichtung R geneigt ist. Der Neigungswinkel α kann beispielsweise im Bereich von 15 Grad bis 90 Grad liegen. Vorzugsweise liegt der im Bereich von 30 Grad bis 60 Grad.

Die Vorrichtung 20 weist außerdem eine Führungseinheit 58 mit einer im Arbeitsbereich 31 angeordneten Führungseinrichtung 59 auf. Die Führungseinrichtung 59 hat einen Führungsdurchgang 60, durch den der Endabschnitt 26a im Arbeitsbereich 31 hindurch verläuft. Die Führungseinrichtung 59 ist parallel zu einer Ebene, die rechtwinklig zur Längsrichtung R ausgerichtet ist, entlang einer Bahn B (Figuren 9, 10 und 13) bewegbar. Dadurch kann der Endabschnitt 26a im Arbeitsbereich 31 quer zu seiner ursprünglichen im Wesentlichen geradlinigen in Längsrichtung R verlaufenden Ausrichtung ausgelenkt werden (Figur 3).

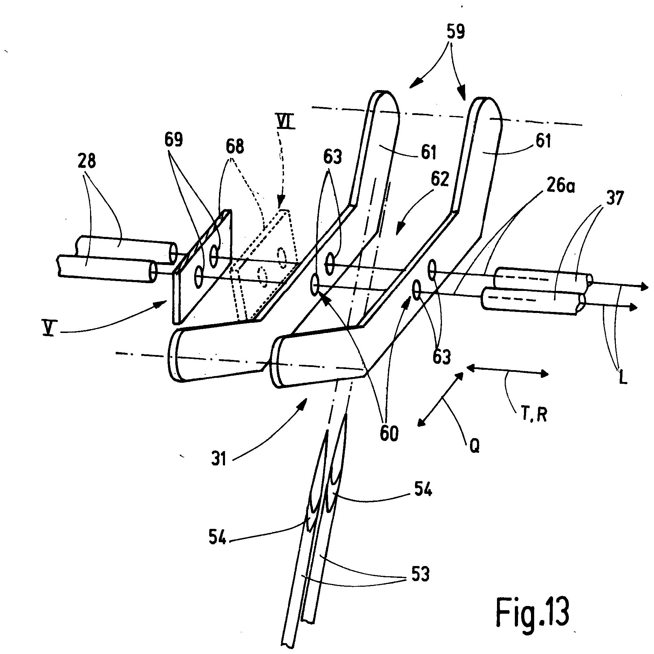

Die Führungseinrichtung 59 ist bei dem hier beschriebenen bevorzugten Ausführungsbeispiel durch zwei Führungskörper 61 gebildet. In Längsrichtung R haben die beiden Führungskörper 61 einen Abstand zueinander und begrenzen dadurch einen Zwischenraum 62. Der Zwischenraum 62 unterteilt den wenigstens einen Führungsdurchgang 60 in zwei Führungslöcher 63. In jedem Führungskörper 61 ist eines der beiden Führungslöcher 63 des gemeinsamen Führungsdurchgangs 60 angeordnet. Die Führungslöcher 63 eines Führungsdurchgangs 60 sind in Längsrichtung R fluchtend angeordnet. Die beiden Führungskörper 61 sind relativ zueinander unbeweglich angeordnet. Bei der Bewegung entlang der Bahn B bewegen sich die Führungskörper 61 synchron zueinander. In Figur 13 ist ein Ausführungsbeispiel für die Ausgestaltung der Führungskörper 61 einer Führungseinrichtung 59 veranschaulicht. Die Führungskörper 61 können in Längsrichtung R plattenförmig dünn sein. Beim Ausführungsbeispiel ist jeder Führungskörper 61 durch eine bügelförmige Platte mit einem mittleren Schenkel und zwei schräg dazu verlaufenden seitlichen Schenkeln gebildet, wobei in dem mittleren Schenkel das wenigstens eine Führungsloch 63 vorhanden ist. Mittels der seitlichen Schenkel kann jeder Führungskörper 61 zur Bewegung entlang der Bahn B gelagert sein.

Die Dimension des Zwischenraums 62 in Längsrichtung R ist ausreichend groß, dass die wenigstens eine Nadel 53 in den Zwischenraum 62 eingreifen kann. Die Längsachse A jeder vorhandenen Nadel 53 erstreckt sich dabei bevorzugt in einer Ebene, die mittig durch den Zwischenraum 62 verläuft (Figuren 1-6).

Die Vorrichtung 20 weist bei dem hier beschriebenen bevorzugten Ausführungsbeispiel eine Stützeinheit 67 auf. Die Stützeinheit 67 hat ein im Arbeitsbereich 31 angeordnetes Stützteil 68. Durch das Stützteil 68 hindurch verläuft wenigstens eine Stützöffnung 69. Die Anzahl der Stützöffnungen 69 entspricht der Anzahl der vorhandenen Faserbündelstränge 26. Die Stützeinheit 67 ist dazu eingerichtet, das Stützteil 68 zwischen einer Ruhestellung V und einer Stützstellung VI zu bewegen und beispielsgemäß um eine Schwenkachse S zu schwenken. Die Schwenkachse S erstreckt sich rechtwinklig zur Längsrichtung R in einer Querrichtung Q. In den Figuren 1-6 verläuft die Querrichtung Q senkrecht zur Zeichenebene. Sind mehrere Faserbündelstränge 26 und dementsprechend mehrere Zufuhrkanäle 28, Saugkanäle 37, Nadeln 53, Führungsdurchgänge 60 und Stützöffnungen 69 vorhanden, sind diese in Querrichtung Q nebeneinander angeordnet (Figur 13). Durch die Ausgestaltung der Vorrichtung 20 kann in Querrichtung Q ein geringer Abstand der Faserbündelstränge 26 und der Nadeln 53 erreicht werden. Dadurch lässt sich eine hohe Dichte an Faserbündeln 22 im Trägerteil 21 erreichen. Die Querrichtung Q und die wenigstens eine Längsachse A der wenigstens einen Nadel 53 erstrecken sich in einer Ebene, parallel zu der die Führungseinrichtung 59 entlang der Bahn B bewegt wird und rechtwinkelig zur Längsrichtung R.

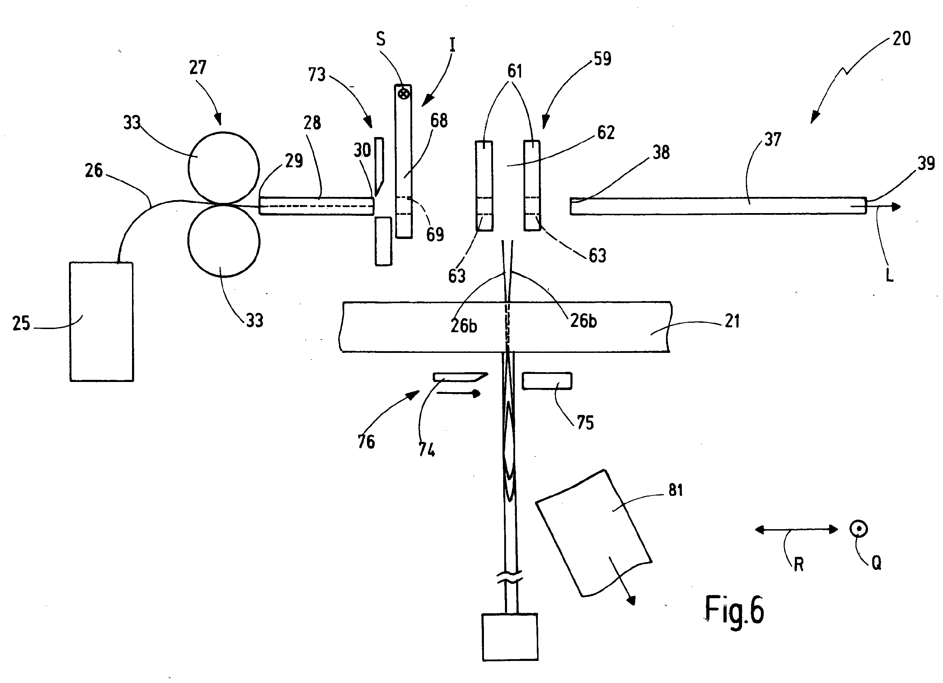

Das Stützteil 68 ist mittels der Stützeinheit 67 zwischen einer Ruhestellung V (Figuren 1, 6 und 13) und einer Stützstellung VI (Figuren 2-5 und 13) bewegbar. Das Stützteil 68 ist beispielsgemäß zwischen der Führungseinrichtung 59 und dem wenigstens einen Zufuhrkanal 28 im Arbeitsbereich 31 angeordnet. In der Ruhestellung V befindet sich das Stützteil 68 näher am wenigstens einen Zufuhrkanal 28 als in der Stützstellung VI. In der Stützstellung VI ist die rechtwinklig zur Längsrichtung R verlaufende Ebene, in der sich die wenigstens eine Längsachse A der wenigstens einen Nadel 53 erstreckt, in etwa mittig zwischen dem Stützteil 68 und dem wenigstens einen Saugkanal 37 angeordnet. Dadurch wird eine symmetrische Schlaufenbildung beim Ergreifen des Endabschnitts 26a durch die wenigstens eine Nadel 53 verbessert, so dass die beiden durch das Trägerteil 21 hindurchgezogenen Schenkel des Faserbündels 22 in etwa gleich lang sind. In der Ruhestellung V fluchtet die wenigstens eine Stützöffnung 69 mit den Mündungen des wenigstens einen zugeordneten Zufuhrkanals 28 und des wenigstens einen zugeordneten Saugkanals 37 (Figuren 1 und 6). Durch das Schwenken ist das Stützteil 68 in der Stützstellung VI schräg zur Längsrichtung R ausgerichtet. Die wenigstens eine Stützöffnung 69 ist vorzugsweise derart dimensioniert, dass sich der Endabschnitt 26a des zugeordneten Faserbündelstrangs 26 noch geradlinig vom Zufuhrkanal 28 durch die Stützöffnung 69 in den Saugkanal 37 erstrecken könnte.

Benachbart zum zweiten Ende 30 des wenigstens einen Zufuhrkanals 28 ist eine erste Trenneinheit 73 angeordnet. Die erste Trenneinheit 73 hat wenigstens eine Schneide 74, die zum Durchtrennen des wenigstens einen Faserbündelstrangs 26 rechtwinklig zur Längsrichtung R bewegbar ist. Auf der der Schneide 74 gegenüberliegenden Seite des Zufuhrkanals 28 ist ein mit der Schneide 74 zusammenwirkendes Gegenwerkzeug 75 der ersten Trenneinheit 73 angeordnet.

Außerdem verfügt die Vorrichtung 20 über eine zweite Trenneinheit 76. Die zweite Trenneinheit 76 ist im Bereich der Positioniereinheit 45 angeordnet. Sie befindet sich auf der Seite der Positioniereinrichtung 45, die dem Arbeitsbereich 31 abgewandt ist. Die zweite Trenneinheit 76 weist analog zur ersten Trenneinheit 73 eine bewegbare Schneide 74 und ein mit der bewegbaren Schneide 74 zusammenarbeitendes Gegenwerkzeug 75 auf. Die Schneide 74 der zweiten Trenneinheit 76 ist beispielsgemäß in Längsrichtung R bewegbar. Die wenigstens eine Schneide 74 und das Gegenwerkzeug 75 der zweiten Trenneinheit 76 liegen sich bezüglich der Längsachse A der zugeordneten Nadel 53 auf entgegengesetzten Seiten gegenüber.

In Figur 1 ist außerdem eine Steuereinrichtung 80 der Vorrichtung 20 veranschaulicht. Die Steuereinrichtung 80 ist dazu ausgebildet, die unterschiedlichen Einheiten und Antriebe der Vorrichtung 20 abgestimmt aufeinander anzusteuern, um die Vorrichtung 20 zur Durchführung des Verfahrens zu betreiben. Hierfür werden entsprechende Steuersignale an die Einheiten und Antriebe übermittelt. Beispielsgemäß übermittelt die Steuereinrichtung 80 folgende Steuersignale:
- ein erstes Steuersignal S1 für den ersten Antrieb 32 der Faserbündelfördereinheit 27,
- ein zweites Steuersignal S2 für die Saugeinheit 40,
- ein drittes Steuersignal S3 für den zweiten Antrieb 41 zur Bewegung des wenigstens einen Saugkanals 39,
- ein viertes Steuersignal S4 und/oder fünftes Steuersignal S5 zum Positionieren eines Trägerteils 21 durch die Positioniereinheit 45,
- ein sechstes Steuersignal S6 für die Nadelhalteeinheit 52 zur Bewegung der wenigstens einen Nadel 53 entlang ihrer jeweiligen Längsachse A zwischen der Rückzugsstellung III und der Ausfahrstellung IV,
- ein siebtes Steuersignal S7 für die Führungseinheit 58 zur Bewegung der Führungseinrichtung 59 entlang der Bahn B,
- ein achtes Steuersignal S8 für die Stützeinheit 67 zur Bewegung des wenigstens einen Stützteils 68 zwischen der Ruhestellung V und der Stützstellung VI,
- ein neuntes Steuersignal S9 zur Betätigung der ersten Trenneinheit 73 und
- ein zehntes Steuersignal S10 zur Betätigung der zweiten Trenneinheit 76.

Die Steuereinrichtung 80 und die jeweils angesteuerten Einheiten sind aus Gründen der Übersichtlichkeit nur in der Figur 1 veranschaulicht und in den Figuren 2-6 nicht dargestellt.

Zur Durchführung eines Verfahrens zur Herstellung einer mehrere Faserbündel 22 aufweisenden Trägerteils 21 wird die vorstehend beschriebene Vorrichtung 20 wie folgt betrieben:

Mittels der Vorschubeinrichtung 45 wird ein Trägerteil 21 in eine gewünschte Position relativ zu der wenigstens einen Nadel 53 gebracht, so dass die Nadel 53 an der gewünschten Stelle durch das Trägerteil 21 hindurchsticht. Der wenigstens eine Saugkanal 39 wird in seine Ausgangsstellung I gebracht und über die Saugeinheit 40 ein Luftstrom L erzeugt. Die Faserbündelfördereinheit 27 wird betrieben, um eine definierte Länge eines Endabschnitts 26a des wenigstens einen Faserbündelstrangs 26 über den betreffenden Zufuhrkanal 28 in den damit fluidisch verbundenen Saugkanal 37 zu fördern. Diese Förderung wird durch die Luftströmung L unterstützt, so dass sich der Endabschnitt 26a im Wesentlichen in Längsrichtung R durch den Zufuhrkanal 28 und den in der Ausgangsstellung I angeordneten Saugkanal 37 erstreckt (Figur 1).

Anschließend wird unter Beibehaltung der Erzeugung des Luftstroms L der wenigstens eine Saugkanal 37 aus dem Arbeitsbereich 31 heraus und von dem wenigstens einen Zufuhrkanal 28 weg bewegt, bis er seine Arbeitsstellung II erreicht hat (Figur 2). Dadurch liegt zumindest ein Teil des Endabschnitts 26a im Arbeitsbereich 31 frei. Ein Stück des Endabschnitts 26a verläuft auch in der Arbeitsstellung II des wenigstens einen Saugrohrs 37 in dem Saugrohr 37 und die Erzeugung der Luftströmung L wird aufrechterhalten. Ein weiteres Fördern des wenigstens einen Faserbündelstrangs 26 wird durch das Stillsetzen der Faserbündelfördereinheit 27 unterbunden. Durch die Saugkraft bzw. die Luftströmung L wird das lose Ende des Endabschnitts 26a angesaugt, so dass der Endabschnitt 26a während des weiteren Verfahrens unter einer gewissen Zugspannung gehalten wird.

Die Nadelhalteeinheit 52 bewegt die wenigstens eine Nadel 53 aus der Rückzugsstellung III heraus, so dass die wenigstens eine Nadel 53 durch das Trägerteil 21 hindurchsticht und in den Arbeitsbereich 31 gelangt (Figur 2). Nachdem oder bevor die wenigstens eine Nadel 53 entlang ihrer jeweiligen Längsachse A vollständig ausgefahren ist und mithin die Ausfahrstellung IV erreicht hat, wird die Führungseinrichtung 59 entlang der Bahn B bewegt. Die Bewegung entlang der Bahn ist schematisch in den Figuren 9 und 10 anhand eines der beiden Führungskörper 61 veranschaulicht.

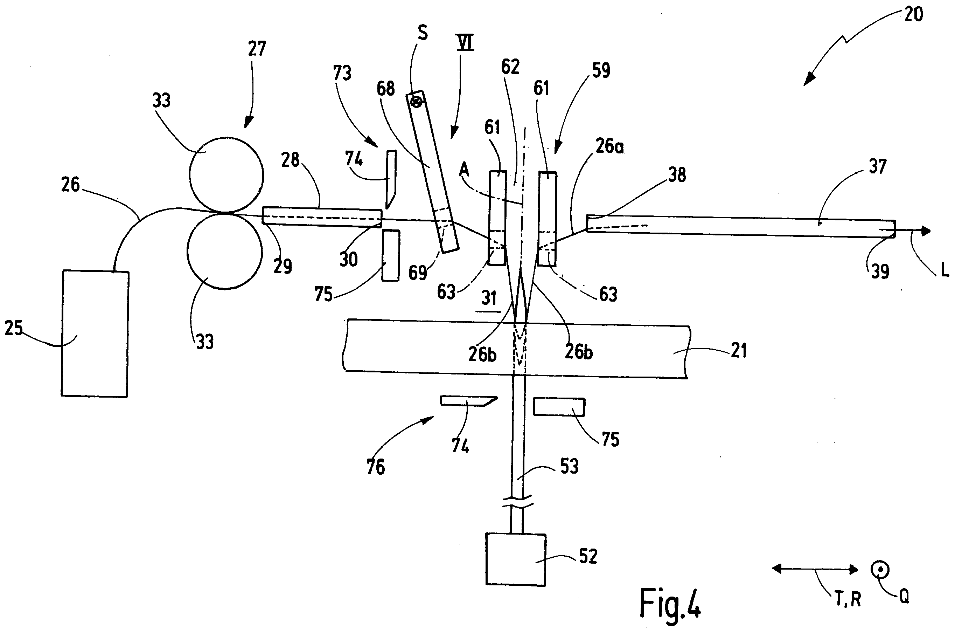

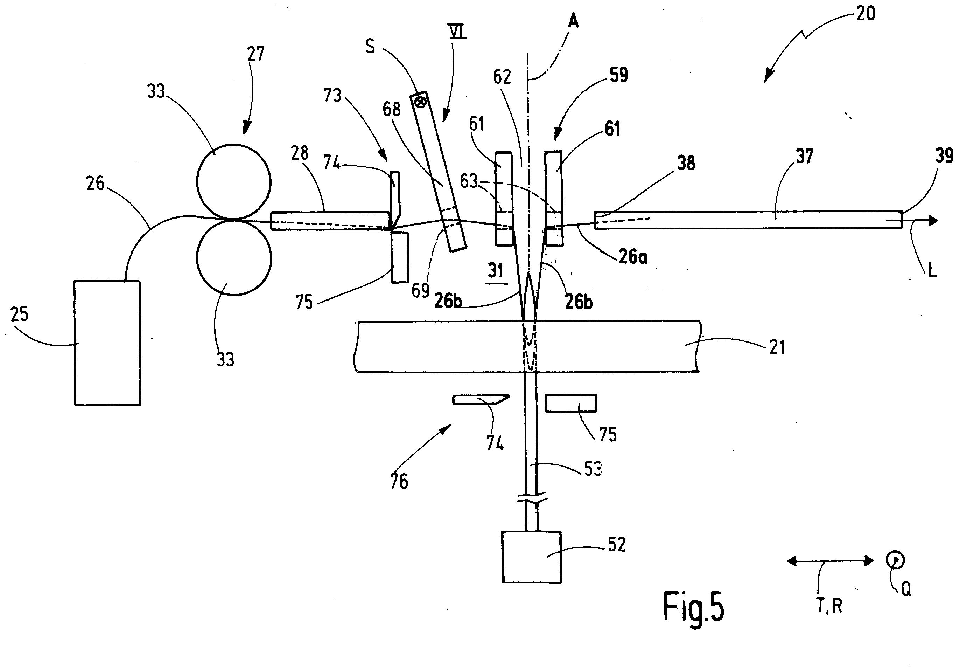

Die Bahn B ist eine in sich geschlossene Bahn und kann beispielsweise elliptisch, oval, kreisförmig oder anderweitig zumindest abschnittsweise gekrümmt verlaufen. Die wenigstens eine Nadel 53 greift mit dem Nadelhaken 54 in den Zwischenraum 62 zwischen den beiden Führungskörpern 61 ein. An einer Übergabestelle U der Bahn B befindet sich der Nadelhaken 54 an einer Position innerhalb eines sich in Längsrichtung R erstreckenden Korridors, dessen Querschnitt durch die Bahn B der Führungslöcher 63 definiert ist. Der Teil des Endabschnitts 26a, der sich zwischen den Führungslöchern 63 durch den Zwischenraum 63 erstreckt, bewegt sich entlang der Bahn B und gelangt an der Übergabestelle U in Kontakt mit der zugeordneten Nadel 53. Zu diesem Zeitpunkt befindet sich der Nadelhaken 54 innerhalb des Korridors oder an der Übergabestelle U (punktierte Darstellung Figur 9). Ausgehend von der Übergabestelle U verläuft die Bahn B schräg bzw. quer von der Längsachse A der jeweiligen Nadel 53 weg. Dadurch wird der im Zwischenraum 62 verlaufende Teil des Endabschnitts 26a sozusagen um die Nadel 53 herumgeführt und bildet zwei Schenkel 26b, die jeweils von der Nadel 53 aus zu einem der Führungslöcher verlaufen (Figuren 4 und 5). Die Schenkel 26b sind sozusagen U-förmig oder V-förmig um die Nadel 53 angeordnet und schließen einen spitzen Winkel ein. Dadurch kann der Endabschnitt 26a durch den Nadelhaken 54 sicher erfasst bzw. gehalten werden. Die Nadelhalteeinheit 52 führt abgestimmt auf die Position der Führungseinrichtung bzw. der Führungskörper 61 entlang der Bahn B die Rückzugsbewegung aus der Ausfahrstellung IV durch (Figur 9). Vor oder mit Beginn der Rückzugsbewegung der wenigstens einen Nadel 53 aus der Ausfahrstellung IV wird das Stützteil 68 in seine Stützposition VI bewegt (Figur 3) .

Die Rückzugsbewegung der wenigstens einen Nadel 53 wird fortgesetzt und gleichzeitig bewegt sich die Führungseinrichtung 59 weiter entlang der Bahn B. In dem Moment, indem der Nadelhaken 54 das Trägerteil 21 erreicht hat und den Endabschnitt 26a des Faserbündelstrangs 26 in das Trägerteil 21 hineinzieht, befindet sich der Führungsdurchgang 60 bzw. befinden sich die Führungslöcher 63 an einer Position der Bahn B in etwa in Verlängerung der Längsachse A, wenn man in Längsrichtung R blickt (Figur 10). Eine Gerade, die die an den Führungslöchern 63 anliegenden Enden der Schenkel 26b verbindet, befindet sich zu dem Zeitpunkt, zu dem der Nadelhaken 54 bzw. der Endabschnitt 26a des Faserbündelstrangs 26 in das Trägerteil 21 eindringt, innerhalb eines Toleranz- oder Winkelbereichs W um eine Kreuzungsstelle K (Figur 10). Die Kreuzungsstelle K ist die Stelle des durch die Bahn B definierten Korridors, an der die Längsachse A den Korridor schneidet, wobei vorzugsweise der vom Trägerteil 21 bzw. der Nadel 53 weiter entfernte Schnittpunkt als Kreuzungsstelle K verwendet wird. Idealerweise befindet sich der Führungsdurchgang 60 bzw. befinden sich die Führungslöcher 63 beim Eindringen des Nadelhakens 54 bzw. des Endabschnitts 26a des Faserbündelstrangs 26 in das Trägerteil 21 an der Kreuzungsstelle K. Dann erstrecken sich die beiden Schenkel 26b des Endabschnitts 26a gegenüber einer rechtwinkelig zu der Querrichtung Q orientierten Ebene in etwa parallel zur Längsachse A der Nadel 53 (Figur 10). Dadurch wird vermieden, dass die Schenkel des Endabschnitts 26a das durch die Nadel 53 im Trägerteil 21 erzeugte Loch einschneiden und dadurch aufweiten. Solange sich der Führungsdurchgang 60 bzw. die Führungslöcher 63 im Toleranz- oder Winkelbereich W der Bahn B befinden, ist eine ausreichend geringe Abweichung der Erstreckung der Schenkel 26b des Endabschnitts 26a gegenüber der Längsachse A der Nadel 53 erreicht und das Einziehen der Schenkel des Endabschnitts 26a des Faserbündelstrangs 26 ist ermöglicht. Der Toleranz- oder Winkelbereich W kann ausgehend von der Austrittsstelle der Nadel 53 aus dem Trägerteil 21 in einer Ebene rechtwinkelig zur Längsrichtung R einen maximalen Betrag von 10 Grad oder 15 Grad oder 20 Grad aufweisen. Dieser Toleranz- oder Winkelbereich W kann symmetrisch oder asymmetrisch zur Längsachse A um die Kreuzungsstelle K herum verlaufen.

Zu Beginn oder während der Rückzugsbewegung der wenigstens einen Nadel 53 aus der Ausfahrstellung IV in die Rückzugsstellung III wird die erste Trenneinheit 73 betätigt und trennt den Endabschnitt 26a des Faserbündelstrangs 26 benachbart zum zweiten Ende 30 des wenigstens einen Zufuhrkanals 28 ab. Das Abtrennen ist in Figur 5 schematisch zu einem Zeitpunkt veranschaulicht, nachdem der Nadelhaken 54 ins Trägerteil 21 eingedrungen ist. Wenn diese Position erreicht ist, kann die Rückzugsbewegung der Nadel 53 gestoppt werden und die Nadel 53 verharrt zunächst in dieser Position, die eine Zwischenstellung darstellt. Dadurch ist gewährleistet, dass die in dieser Position insbesondere gleich langen Schenkel 26b des Faserbündelstrangs 26 im Trägerteil gehalten werden bzw. fixiert sind. Bei einem Ausführungsbeispiel erfolgt das Durchtrennen des Faserbündelstrangs 26 mittels der ersten Trenneinheit 73 erst dann, wenn die Nadel die Zwischenstellung erreicht hat. Die gleiche Länge der Schenkel 26b bleibt dann bei einer fortgesetzten Bewegung der Nadel 53 aus der Zwischenstellung in die Rückzugsstellung III erhalten. Das Durchtrennen kann alternativ auch zu einem früheren Zeitpunkt der Rückzugsbewegung der wenigstens einen Nadel 53 erfolgen.

Bei der Bewegung der Nadel 53 aus der Ausfahrstellung IV in die Zwischenstellung findet eine Relativbewegung des Endabschnitts 26a des Faserbündelstrangs 26 in seiner Verlaufsrichtung relativ zum Nadelhaken 54 statt. Dabei verschiebt sich die Kontaktstelle zwischen dem Endabschnitts 26a des Faserbündelstrangs 26 und dem Nadelhaken 54 entlang des Endabschnitts 26a. Diese Relativbewegung kann bei einem Ausführungsbeispiel zur Schonung des Faserbündelstrangs 26 vermieden werden. Dies kann dadurch erreicht werden, dass der erste Antrieb 32 durch das erste Steuersignal S1 derart betätigt wird, dass genau so viel an zusätzlicher Länge des Endabschnitts 26a gefördert wird, wie es für die Schlaufenbildung bei der Bewegung der Nadel 53 aus der Ausfahrstellung IV in die Zwischenstellung erforderlich ist. Die zusätzlich benötigte Länge kann dem Weg entsprechen, den der Nadelhaken 54 von der Ausfahrstellung IV in die Zwischenstellung zurücklegt.

In Figur 6 ist veranschaulicht, wie der abgetrennte Endabschnitt 26a bzw. die beiden Schenkel 26b unter Bildung einer Schlaufe durch das Trägerteil 21 gezogen ist. Nach dem Bilden der Schlaufe wird die zweite Trenneinheit 76 angesteuert, um die Schlaufe zu durchtrennen und somit die beiden Schenkel 26b des durch das Trägerteil 21 hindurchgezogenen Endabschnitts 26a voneinander zu trennen, um das Faserbündel 22 zu bilden. Diese Situation ist in Figur 6 schematisch durch den Pfeil an der Schneide 74 der zweiten Trenneinheit 76 veranschaulicht.

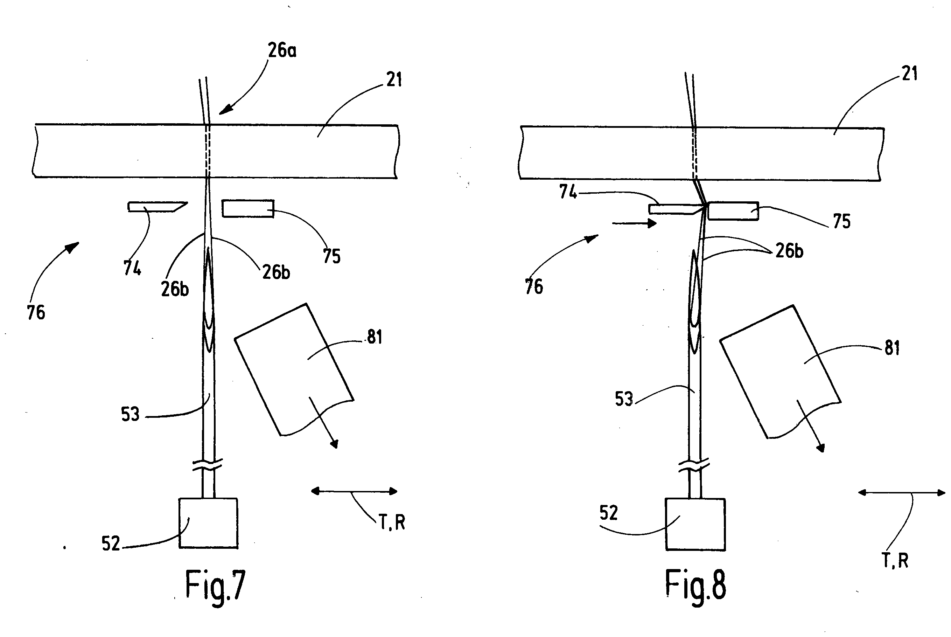

Anhand der Figuren 7 und 8 wird ein bevorzugter Ablauf beim Durchtrennen der zwischen den Schenkeln 26b gebildeten Schlaufe durch die zweite Trenneinheit 76 geschildert. Nachdem die Nadelhalteeinheit 52 die wenigstens eine Nadel 53 vollständig durch das Trägerteil 21 hindurchgezogen hat, werden die Schenkel 26 b durchtrennt. Beim Betätigen der zweiten Trenneinheit 76 drückt die Schneide 74 die beiden Schenkel 26b des Endabschnitts 26a zunächst quer auf das Gegenwerkzeug 75 zu bis die beiden Schenkel 26b zwischen der Schneide 74 und dem Gegenwerkzeug 75 durchtrennt werden (Figur 8).

Wie es in den Figuren 6-8 schematisch dargestellt ist, kann im Bereich der zweiten Trenneinheit 76 eine Absaugeinrichtung 81 vorhanden sein. Die durch die zweite Trenneinheit 76 abgetrennte Schlaufe wird durch die Absaugeinrichtung 81 abgesaugt.

Die Erfindung betrifft eine Vorrichtung 20 und ein Verfahren zur Herstellung eines mehrere Faserbündel 22 aufweisenden Trägerteils 21. Aus einem Vorrat 25 wird mit Hilfe einer Faserbündelfördereinheit 27 wenigstens ein Faserbündelstrang 26 entnommen und in jeweils einen zugeordneten Zufuhrkanal 28 gefördert. Jedem Zufuhrkanal 28 ist ein Saugkanal 37 zugeordnet, der in einer Ausgangsstellung I fluidisch mit dem jeweils zugeordneten Zufuhrkanal 28 verbunden ist. Über eine Saugeinheit 40 wird in dem Saugkanal 37 eine Luftströmung L vom Zufuhrkanal 28 weg erzeugt und ein Endabschnitt 26a des wenigstens einen Faserbündelstrangs 26 wird durch die Saugkraft unterstützt in den Saugkanal gefördert. Durch Bewegen des wenigstens einen Saugkanals 37 in eine Arbeitsstellung II liegt zumindest ein Teil des Endabschnitts 26a des wenigstens einen Faserbündelstrangs 26 in einem Arbeitsbereich 31 der Vorrichtung 20 frei. Eine Nadeleinheit 52 mit wenigstens einer Nadel 53 kann den wenigstens einen Endabschnitt 26a im Arbeitsbereich 31 erfassen und beim Hindurchbewegen durch ein Trägerteil 21 der wenigstens einen Nadel 53 durch das Trägerteil 21 ziehen oder schieben.

### Bezugszeichenliste:

- 20: Vorrichtung
- 21: Trägerteil
- 22: Faserbündel

- 25: Vorrat
- 26: Faserbündelstrang
- 26a: Endabschnitt des Faserbündelstrangs
- 26b: Schenkel des Endabschnitts des Faserbündelstrangs
- 27: Faserbündelfördereinheit
- 28: Zufuhrkanal
- 29: erstes Ende des Zufuhrkanals
- 30: zweites Ende des Zufuhrkanals
- 31: Arbeitsbereich
- 32: erster Antrieb
- 33: Rolle

- 37: Saugkanal
- 38: erstes Ende des Saugkanals
- 39: zweites Ende des Saugkanals
- 40: Saugeinheit
- 41: zweiter Antrieb

- 45: Positioniereinheit

- 52: Nadelhalteeinheit
- 53: Nadel
- 54: Nadelhaken

- 58: Führungseinheit
- 59: Führungseinrichtung
- 60: Führungsdurchgang
- 61: Führungskörper
- 62: Zwischenraum
- 63: Führungsloch

- 67: Stützeinheit
- 68: Stützteil
- 69: Stützöffnung

- 73: erste Trenneinheit
- 74: Schneide
- 75: Gegenwerkzeug
- 76: zweite Trenneinheit

- 80: Steuereinrichtung
- 81: Absaugeinrichtung

- I: Ausgangsstellung
- II: Arbeitsstellung
- III: Rückzugsstellung
- IV: Ausfahrstellung
- V: Ruhestellung
- VI: Stützstellung
- α: Neigungswinkel

- A: Längsachse der Nadel
- B: Bahn
- K: Kreuzungsstelle
- L: Luftströmung
- Q: Querrichtung
- R: Längsrichtung
- S: Schwenkachse
- S1: erstes Steuersignal
- S2: zweites Steuersignal
- S3: drittes Steuersignal
- S4: viertes Steuersignal
- S5: fünftes Steuersignal
- S6: sechstes Steuersignal
- S7: siebtes Steuersignal
- S8: achtes Steuersignal
- S9: neuntes Steuersignal
- S10: zehntes Steuersignal
- T: Transportrichtung
- U: Übergabestelle
- W: Toleranz- oder Winkelbereich
- x: Abstand der Faserbündel in einer Raumrichtung
- y: Abstand der Faserbündel in einer anderen Raumrichtung

## Patentansprüche

1. Vorrichtung (20) zur Herstellung eines mehrere Faserbündel (22) aufweisenden Trägerteils (21),
mit einer Faserbündelfördereinheit (27), die dazu eingerichtet ist, wenigstens einen Faserbündelstrang (26) aus einem Vorrat (25) zu entnehmen und in einen jeweils zugeordneten Zufuhrkanal (28) zu fördern,
mit wenigstens einem Saugkanal (37), der zwischen einer Ausgangsstellung (I) und einer Arbeitsstellung (II) bewegbar ist, wobei jeder Saugkanal (37) in der Ausgangsstellung (I) innerhalb eines Arbeitsbereichs (31) angeordnet und mit jeweils einem Zufuhrkanal (28) fluidverbunden ist und in der Arbeitsstellung (II) vom Zufuhrkanal (28) entfernt und außerhalb des Arbeitsbereichs (31) angeordnet ist,
mit einer Saugeinheit (40), die fluidisch mit dem wenigstens einen Saugkanal (37) verbunden ist und dazu eingerichtet ist eine Luftströmung (L) in dem wenigstens einen Saugkanal (37) zu erzeugen, um in der Ausgangsstellung (I) einen Endabschnitt (26a) des wenigstens einen Faserbündelstrangs (26) aus dem zugeordneten Zufuhrkanal (28) durch die Unterstützung der Luftströmung (L) einzuführen und in der Arbeitsstellung (II) den im Saugkanal (37) vorhandenen Endabschnitt (26a) des wenigstens einen Faserbündelstrangs (26) mit einer Saugkraft zu beaufschlagen,
mit wenigstens einer an einer Nadelhalteeinheit (52) angeordneten Nadel (53), die jeweils einen Nadelhaken (54) aufweist, wobei die Nadelhalteeinheit (52) dazu eingerichtet ist, die wenigstens eine Nadel (53) zwischen einer Rückzugsstellung (III) und einer Ausfahrstellung (IV) zu bewegen, um mit dem Nadelhaken (54) jeder Nadel (53) an einem jeweils zugeordneten, in der Arbeitsstellung (II) des Saugkanals (37) im Arbeitsbereich (31) frei liegenden und sich in einer Längsrichtung (R) erstreckenden Endabschnitt (26a) des wenigstens einen Faserbündelstrangs (26) anzugreifen und mittels der Nadel (53) durch das Trägerteil (21) hindurch zu bewegen.

2. Vorrichtung nach Anspruch 1,
**dadurch gekennzeichnet, dass** eine Positioniereinheit (45) vorhanden und dazu eingerichtet ist, das Trägerteil (21) in einer Transportrichtung (T) zu bewegen und/oder zu positionieren.

3. Vorrichtung nach Anspruch 2,
**dadurch gekennzeichnet, dass** die Positioniereinheit (45) zwischen dem Arbeitsbereich (31) und der Nadelhalteeinheit (52) angeordnet ist.

4. Vorrichtung nach einem der vorhergehenden Ansprüche,
**dadurch gekennzeichnet, dass** die Faserbündelfördereinheit (27) dazu eingerichtet ist, in der Ausgangsstellung (I) des wenigstens einen Saugrohres (37) eine vorgegebene Länge des wenigstens einen Faserbündelstrangs (26) über den zugeordneten Zuführkanal (28) in den jeweils damit fluidverbundenen Saugkanal (37) zu fördern.

5. Vorrichtung nach einem der vorhergehenden Ansprüche,
**dadurch gekennzeichnet, dass** eine Führungseinheit (58) vorhanden ist, die eine zur Führung des Endabschnitts (26a) des wenigstens einen Faserbündelstrangs (26) im Arbeitsbereich (31) angeordneten Führungseinrichtung (59) aufweist, die jeweils einen separaten Führungsdurchgang (60) für jeden Endabschnitt (26a) des wenigstens einen Faserbündelstrangs (26) aufweist.

6. Vorrichtung nach Anspruch 5,
**dadurch gekennzeichnet, dass** der wenigstens eine Saugkanal (37) in seiner Ausgangsstellung (I) durch jeweils einen Führungsdurchgang (60) der Führungseinheit (59) hindurch verläuft.

7. Vorrichtung nach Anspruch 5 oder 6,
**dadurch gekennzeichnet, dass** die Führungseinrichtung (59) zwei Führungskörper (61) aufweist, die in der Längsrichtung (R) unter Bildung eines Zwischenraums (62) mit Abstand zueinander angeordnet sind, wobei der wenigstens eine Führungsdurchgang (60) durch zwei miteinander fluchtende Führungslöcher (63) gebildet ist, wobei jedes Führungsloch (63) eines gemeinsamen Führungsdurchgangs (60) in einem der beiden Führungskörper (61) angeordnet ist.

8. Vorrichtung nach einem der Ansprüche 5 bis 7,
**dadurch gekennzeichnet, dass** die Führungseinheit (58) dazu eingerichtet ist, den Führungsdurchgang (60) der Führungseinrichtung (59) entlang einer vorgegebenen Bahn (B) parallel zu einer Ebene zu bewegen, die rechtwinkelig zu der Längsrichtung (R) ausgerichtet ist.

9. Vorrichtung nach Anspruch 8,
**dadurch gekennzeichnet, dass** die Bahn (B) eine geschlossene, zumindest abschnittsweise gekrümmte Bahn (B) ist.

10. Vorrichtung nach einem der vorhergehenden Ansprüche,
**dadurch gekennzeichnet, dass** die Nadelhalteeinheit (52) dazu eingerichtet ist, dass die wenigstens eine Nadel (53) in ihrer Ausfahrstellung (IV) oder ihrer Rückzugsstellung (III) einen durch die Bahn (B) definierten und sich in Längsrichtung (R) erstreckenden Korridor kreuzt.

11. Vorrichtung nach einem der vorhergehenden Ansprüche,
**dadurch gekennzeichnet, dass** eine Stützeinheit (67) vorhanden und dazu eingerichtet ist, ein im Arbeitsbereich (31) angeordnetes Stützteil (68) zwischen einer Ruhestellung (V) und einer Stützstellung (VI) zu bewegen, wobei das Stützteil (68) für jeden Endabschnitt (26a) eines Faserbündelstrangs (26) jeweils eine Stützöffnung (69) aufweist.

12. Vorrichtung nach Anspruch 11,
**dadurch gekennzeichnet, dass** der wenigstens eine Saugkanal (37) in seiner Ausgangsstellung (I) durch jeweils eine Stützöffnung (69) hindurch verläuft.

13. Vorrichtung nach Anspruch 11 oder 12,
**dadurch gekennzeichnet, dass** die wenigstens eine Stützöffnung (69) des Stützteils (68) in der Stützstellung (VI) in etwa denselben Abstand zu einer Ebene aufweist, in der die Nadelhalteeinheit (52) die jeweils zugeordnete Nadel (53) bewegt, wie der jeweils zugeordnete sich in der Arbeitsstellung (II) befindende Saugkanal (37) .

14. Vorrichtung nach einem der vorhergehenden Ansprüche,
**dadurch gekennzeichnet, dass** benachbart zum Zufuhrkanal (28) eine erste Trenneinheit (73) vorhanden und dazu eingerichtet ist, den Endabschnitt (26a) des wenigstens einen Faserbündelstrangs (26) abzutrennen.

15. Vorrichtung nach einem der vorhergehenden Ansprüche,
**dadurch gekennzeichnet, dass** eine zweite Trenneinheit (76) vorhanden und dazu eingerichtet ist, eine Schlaufe des von der wenigstens einen Nadel (53) durch das Trägerteil (21) hindurch bewegten Endabschnitts (26a) des Faserbündelstrangs (26) aufzutrennen.

16. Verfahren zur Herstellung eines mehrere Faserbündel (22) aufweisenden Trägerteils (21) unter Verwendung einer Vorrichtung (20) aufweisend einen Vorrat (25) mit wenigstens einem Faserbündelstrang (26), eine Faserbündelfördereinheit (27) für den wenigstens einen Faserbündelstrang (26), wenigstens einen Zufuhrkanal (28), wenigstens einen Saugkanal (37), eine Saugeinheit (40), die fluidisch mit dem wenigstens einen Saugkanal (37) verbunden ist und wenigstens eine an einer Nadelhalteeinheit (52) angeordnete Nadel (53), die jeweils einen Nadelhaken (54) aufweist, mit folgenden Schritten:
- Bewegen des wenigstens einen Saugkanals (37) in eine Ausgangsstellung (I) in einen Arbeitsbereich (31), wobei jeder Saugkanal (37) mit jeweils einem Zufuhrkanal (28) fluidverbunden ist,
- Erzeugen einer Luftströmung (L) in dem wenigstens einen Saugkanal (37) mittels der Saugeinheit (40), um in der Ausgangsstellung (I) einen im zugeordneten Zufuhrkanal (28) vorhandenen Endabschnitt (26a) des Faserbündelstrangs (26) durch die Unterstützung der Luftströmung (L) anzusaugen,
- Fördern einer vorgegebenen Länge des wenigstens einen Endabschnitts (26a) des Faserbündelstrangs (26) über jeweils einen Zufuhrkanal (28) in den damit fluidverbundenen Saugkanal (37) mittels der Faserbündelfördereinheit (27),
- Bewegen des wenigstens einen Saugkanals (37) aus dem Arbeitsbereich (31) heraus in eine Arbeitsstellung (II) entfernt vom Zufuhrkanal (28), wobei die Luftströmung (L) im Saugkanal (37) in der Arbeitsstellung (II) aufrechterhalten wird,
- Bewegen der wenigstens einen Nadel (53) zwischen einer Rückzugsstellung (III) und einer Ausfahrstellung (IV), um mit dem Nadelhaken (54) jeder Nadel (53) an einem jeweils zugeordneten, in der Arbeitsstellung (II) des Saugkanals (37) im Arbeitsbereich (31) frei liegenden und sich in einer Längsrichtung (R) erstreckenden Endabschnitt (26a) des Faserbündelstrangs (26) anzugreifen und mittels der Nadel (53) durch das Trägerteil (21) hindurch zu bewegen.

## Claims

1. Device (20) for the production of a carrier (21) having multiple fibre bundles (22), with a fibre bundle conveying unit (27) which is configured to take at least one fibre bundle strand (26) from a store (25) and convey it into a respective assigned feed channel (28),
with at least one suction channel (37) which is movable between a starting position (I) and a working position (II), wherein each suction channel (37) in the starting position (I) is arranged inside a working region (31) and fluidically connected to a respective feed channel (28), and in the working position (II) is remote from the feed channel (28) and arranged outside the working region (31),
with a suction unit (40) which is fluidically connected to the at least one suction channel (37) and is configured to generate an air flow (L) in the at least one suction channel (37) in order, in the starting position (I), to feed in an end portion (26a) of the at least one fibre bundle strand (26) from the assigned feed channel (28) with the support of the air flow (L), and in the working position (II), to apply a suction force to the end portion (26a) of the at least one fibre bundle strand (26) present in the suction channel (37),
with at least one needle (53) arranged on a needle holding unit (52) and having a respective needle hook (54), wherein the needle holding unit (52) is configured to move the at least one needle (53) between a retraction position (III) and an extension position (IV) in order, by means of the needle hook (54) of each needle (53), to grip on a respective assigned end portion (26a) of the at least one fibre bundle strand (26) which is exposed in the working region (31) and extends in a longitudinal direction (R), and move this through the carrier (21) by means of the needle (53).

2. Device according to claim 1, **characterised in that** a positioning unit (45) is present and is configured to move and/or position the carrier (21) in a transport direction (T).

3. Device according to claim 2, **characterised in that** the positioning unit (45) is arranged between the working region (31) and the needle holding unit (52).

4. Device according to any of the preceding claims, **characterised in that** the fibre bundle conveying unit (27) is configured, in the starting position (I) of the at least one suction pipe (37), to convey a predefined length of the at least one fibre bundle strand (26) via the assigned feed channel (28) into the respective suction channel (37) which is fluidically connected thereto.

5. Device according to any of the preceding claims, **characterised in that** a guide unit (58) is provided, having a guide device (59) which is arranged in the working region (31) for guiding the end portion (26a) of the at least one fibre bundle strand (26) and has a respective separate guide passage (60) for each end portion (26a) of the at least one fibre bundle strand (26).

6. Device according to claim 5, **characterised in that** in its starting position (I), the at least one suction channel (37) passes through a respective guide passage (60) of the guide unit (59).

7. Device according to claim 5 or 6, **characterised in that** the guide device (59) has two guide bodies (61) which are arranged spaced apart from one another in the longitudinal direction (R) so as to form an intermediate space (62), wherein the at least one guide passage (60) is formed by two mutually aligned guide holes (63), wherein each guide hole (63) of a common guide passage (60) is arranged in a respective one of the two guide bodies (61).

8. Device according to any of claims 5 to 7, **characterised in that** the guide unit (58) is configured to move the guide passage (60) of the guide device (59) along a predefined track (B) parallel to a plane that is oriented at right angles to the longitudinal direction (R).

9. Device according to claim 8, **characterised in that** the track (B) is a closed track (B) which is curved at least in portions.

10. Device according to any of the preceding claims, **characterised in that** the needle holding unit (52) is configured such that, in its extension position (IV) or its retraction position (III), the at least one needle (53) crosses a corridor defined by the track (B) and extending in the longitudinal direction (R).

11. Device according to any of the preceding claims, **characterised in that** a support unit (67) is present and configured to move a support part (68), which is arranged in the working region (31), between a rest position (V) and a support position (VI), wherein the support part (68) has a respective support opening (69) for each end portion (26a) of a fibre bundle strand (26).

12. Device according to claim 11, **characterised in that** in its starting position (I), the at least one suction channel (37) runs through a respective support opening (69).

13. Device according to claim 11 or 12, **characterised in that** in the support position (VI), the at least one support opening (69) of the support part (68) has approximately the same distance from a plane, in which the needle holding unit (52) moves the respective assigned needle (53), as the respective assigned suction channel (37) in the working position (II).

14. Device according to any of the preceding claims, **characterised in that** next to the feed channel (28) is a first separating unit (73) which is configured to cut off the end portion (26a) of the at least one fibre bundle strand (26).

15. Device according to any of the preceding claims, **characterised in that** a second separating unit (76) is present and configured to cut open a loop of the end portion (26a) of the fibre bundle strand (26) which has been moved by the at least one needle (53) through the carrier (21).

16. Method for production of a carrier (21) having multiple fibre bundles (22), using a device (20) having a store (25) with at least one fibre bundle strand (26), a fibre bundle conveying unit (27) for the at least one fibre bundle strand (26), at least one feed channel (28), at least one suction channel (37), a suction unit (40) which is fluidically connected to the at least one suction channel (37), and at least one needle (53) arranged on a needle holding unit (52) and having a respective needle hook (54), with the following steps:
- moving the at least one suction channel (37) into a starting position (I) in a working region (31), wherein each suction channel (37) is fluidically connected to a respective feed channel (28),
- generating an air flow (L) in the at least one suction channel (37) by means of the suction unit (40) in order, in the starting position (I), to draw in an end portion (26a) of the fibre bundle strand (26) present in the assigned feed channel (28) with the support of the air flow (L),
- conveying, by means of the fibre bundle conveying unit (27), a predefined length of the at least one end portion (26a) of the fibre bundle strand (26) via a respective feed channel (28) into the suction channel (37) which is fluidically connected thereto,
- moving the at least one suction channel (37) out of the working region (31) into a working position (II) remote from the feed channel (28), wherein in the working position (II), the air flow (L) in the suction channel (37) is maintained,
- moving the at least one needle (53) between a retraction position (III) and an extension position (IV) in order, by means of the needle hook (54) of each needle (53), to grip on a respective assigned end portion (26a) of the fibre bundle strand (26) which is exposed in the working region (31) in the working position (II) of the suction channel (37) and extends in a longitudinal direction (R), and move it through the carrier (21) by means of the needle (53).

## Revendications

1. Dispositif (20) de fabrication d'un support (21) comportant une pluralité de faisceaux de fibres (22),
comprenant une unité transporteuse de faisceaux de fibres (27) qui est agencée pour prélever au moins un cordon de faisceaux de fibres (26) dans une réserve (25) et de le transporter respectivement dans un conduit d'amenée (28) associé,
comprenant au moins un conduit d'aspiration (37) qui peut être déplacé entre une position de départ (I) et une position de travail (II), chaque conduit d'aspiration (37), dans sa position de départ (I), étant disposé dans une zone de travail (31) et étant relié sur le plan fluidique respectivement à un conduit d'amenée (28), et, dans sa position de travail (II), étant disposé à distance du conduit d'amenée (28) et à l'extérieur de la zone de travail (31),
comprenant une unité d'aspiration (40) qui est reliée sur le plan fluidique au conduit d'aspiration (37), au nombre d'au moins un, et est agencée pour générer un flux d'air (L) dans le conduit d'aspiration (37), au nombre d'au moins un, aux fins d'introduire, dans la position de départ (I), une partie d'extrémité (26a) du cordon de faisceaux de fibres (26), au nombre d'au moins un, depuis le conduit d'amenée (28) associé, à l'aide du flux d'air (L), et, dans la position de travail (II), d'appliquer une force d'aspiration à la partie d'extrémité (26a) du cordon de faisceaux de fibres (26), au nombre d'au moins un, se trouvant dans le conduit d'aspiration (37),
comprenant au moins une aiguille (53) qui est disposée sur une unité de support d'aiguille (52) et présente respectivement un crochet d'aiguille (54), l'unité de support d'aiguille (52) étant agencée pour déplacer l'aiguille (53), au nombre d'au moins une, entre une position de retrait (III) et une position avancée (IV), aux fins de venir en prise, avec le crochet d'aiguille (54) de chaque aiguille (53), sur une partie d'extrémité (26a) respectivement associée du cordon de faisceaux de fibres (26), au nombre d'au moins un, qui est dégagée dans la zone de travail (31) lorsque le conduit d'aspiration (37) est en position de travail (II) et qui s'étend dans une direction longitudinale (R), et de la déplacer à travers le support (21) au moyen de l'aiguille (53).

2. Dispositif selon la revendication 1, **caractérisé en ce qu'**une unité de positionnement (45) est prévue et est agencée pour déplacer et/ou positionner le support (21) dans une direction de transport (T).

3. Dispositif selon la revendication 2, **caractérisé en ce que** l'unité de positionnement (45) est placée entre la zone de travail (31) et l'unité de support d'aiguille (52).

4. Dispositif selon l'une des revendications précédentes, **caractérisé en ce que** l'unité transporteuse de faisceaux de fibres (27) est agencée pour transporter, dans la position de départ (I) du tube d'aspiration (37), au nombre d'au moins un, une longueur prédéterminée du cordon de faisceaux de fibres (26), au nombre d'au moins un, dans le conduit d'aspiration (37) relié respectivement à celui-ci du point fluidique, en passant par le conduit d'amenée (28) associé.

5. Dispositif selon l'une des revendications précédentes, **caractérisé en ce qu'**il est prévu une unité de guidage (58) présentant un dispositif de guidage (59) qui est placé dans la zone de travail (31) en vue du guidage de la partie d'extrémité (26a) du cordon de faisceaux de fibres (26), au nombre d'au moins un, et qui comporte respectivement un passage de guidage (60) séparé pour chaque partie d'extrémité (26a) du faisceau de fibres (26), au nombre d'au moins un.

6. Dispositif selon la revendication 5, **caractérisé en ce que** dans sa position de départ (I), le conduit d'aspiration (37), au nombre d'au moins un, s'étend respectivement à travers un passage de guidage (60) de l'unité de guidage (59).

7. Dispositif selon la revendication 5 ou 6, **caractérisé en ce que** le dispositif de guidage (59) présente deux corps de guidage (61) qui sont placés à distance l'un de l'autre dans la direction longitudinale (R), en formant un espace (62), le passage de guidage (60), au nombre d'au moins un, étant formé par deux trous de guidage (63) alignés l'un avec l'autre, chaque trou de guidage (63) d'un passage de guidage (60) commun étant disposé dans l'un des deux corps de guidage (61).

8. Dispositif selon l'une des revendications 5 à 7, **caractérisé en ce que** l'unité de guidage (58) est agencée pour déplacer le passage de guidage (60) du dispositif de guidage (59) le long d'une trajectoire (B) prédéterminée, parallèlement à un plan qui est orienté à angle droit par rapport à la direction longitudinale (R).

9. Dispositif selon la revendication 8, **caractérisé en ce que** la trajectoire (B) est une trajectoire (B) fermée, incurvée au moins par portions.

10. Dispositif selon l'une des revendications précédentes, **caractérisé en ce que** l'unité de support d'aiguille (52) est agencée pour que l'aiguille (53), au nombre d'au moins une, dans sa position avancée (IV) ou dans sa position de retrait (III), croise un couloir défini par la trajectoire (B) et s'étendant dans la direction longitudinale (R).

11. Dispositif selon l'une des revendications précédentes, **caractérisé en ce qu'**une unité d'appui (67) est prévue et est agencée pour déplacer un élément d'appui (68), disposé dans la zone de travail (31), entre une position de repos (V) et une position d'appui (VI), l'élément d'appui (68) présentant respectivement une ouverture d'appui (69) pour chaque partie d'extrémité (26a) d'un cordon de faisceaux de fibres (26).

12. Dispositif selon la revendication 11, **caractérisé en ce que** dans sa position de départ (I), le conduit d'aspiration (37), au nombre d'au moins un, passe respectivement dans une ouverture d'appui (69).

13. Dispositif selon la revendication 11 ou 12, **caractérisé en ce que** dans la position d'appui (VI), l'ouverture d'appui (69), au nombre d'au moins une, de l'élément d'appui (68) présente à peu près la même distance par rapport à un plan dans lequel l'unité de support d'aiguille (52) déplace l'aiguille (53) respective associée que le conduit d'aspiration (37) respectivement associé qui se trouve dans la position de travail (II).

14. Dispositif selon l'une des revendications précédentes, **caractérisé en ce que**, à proximité du conduit d'amenée (28), il est prévu une première unité de sectionnement (73) qui est agencée pour sectionner la partie d'extrémité (26a) du cordon de faisceaux de fibres (26), au nombre d'au moins un.

15. Dispositif selon l'une des revendications précédentes, **caractérisé en ce qu'**il est prévu une deuxième unité de sectionnement (76) qui est agencée pour sectionner une boucle de la partie d'extrémité (26a) du cordon de faisceaux de fibres (26) déplacée à travers le support (21) par l'aiguille (53), au nombre d'au moins une.

16. Procédé de fabrication d'un support (21) comportant une pluralité de faisceaux de fibres (22), en utilisant un dispositif (20) présentant une réserve (25) avec au moins un cordon de faisceaux de fibres (26), une unité transporteuse de faisceaux de fibres (27) pour le cordon de faisceaux de fibres (26), au nombre d'au moins un, au moins un conduit d'amenée (28), au moins un conduit d'aspiration (37), une unité d'aspiration (40) qui est reliée sur le plan fluidique au conduit d'aspiration (37), au nombre d'au moins un, et au moins une aiguille (53) qui est disposée sur une unité de support d'aiguille (52) et présente respectivement un crochet d'aiguille (54), comprenant les étapes suivantes :
- déplacement du conduit d'aspiration (37), au nombre d'au moins un, dans une position de départ (I) dans une zone de travail (31), chaque conduit d'aspiration (37) étant relié sur le plan fluidique respectivement à un conduit d'amenée (28),
- génération d'un flux d'air (L) dans le conduit d'aspiration (37), au nombre d'au moins un, à l'aide de l'unité d'aspiration (40), aux fins d'aspirer, dans la position de départ (I), une partie d'extrémité (26a) du cordon de faisceaux de fibres (26) se trouvant dans le conduit d'amenée (28) associé, à l'aide du flux d'air (L),
- transport d'une longueur prédéterminée de la partie d'extrémité (26a) du cordon de faisceaux de fibres (26), au nombre d'au moins une, respectivement par l'intermédiaire d'un conduit d'amenée (28), dans le conduit d'aspiration (37) qui y est relié sur le plan fluidique, au moyen de l'unité transporteuse de faisceaux de fibres (27),
- déplacement du conduit d'aspiration (37), au nombre d'au moins un, à partir de la zone de travail (31), dans une position de travail (II) située à distance du conduit d'amenée (28), le flux d'air (L) dans le conduit d'aspiration (37) étant maintenu dans la position de travail (II),
- déplacement de l'aiguille (53), au nombre d'au moins une, entre une position de retrait (III) et une position avancée (IV), aux fins de venir en prise, avec le crochet d'aiguille (54) de chaque aiguille (53), sur une partie d'extrémité (26a) respectivement associée du cordon de faisceaux de fibres (26) qui est dégagée dans la zone de travail (31) lorsque le conduit d'aspiration (37) est en position de travail (II) et qui s'étend dans une direction longitudinale (R), et de la déplacer à travers le support (21) au moyen de l'aiguille (53).
